(19) Europäisches Patentamt
European Patent Office
Office européen des brevets

(11) **EP 2 556 862 B1**

(12) **EUROPEAN PATENT SPECIFICATION**

(45) Date of publication and mention
of the grant of the patent:
**01.06.2022 Bulletin 2022/22**

(21) Application number: **10849407.1**

(22) Date of filing: **05.04.2010**

(51) International Patent Classification (IPC):
**A63B 69/14** (2006.01)    **G09B 19/00** (2006.01)

(52) Cooperative Patent Classification (CPC):
**A63B 69/14; G09B 19/0038;** A63B 2225/605;
A63B 2230/62

(86) International application number:
**PCT/JP2010/056169**

(87) International publication number:
**WO 2011/125163 (13.10.2011 Gazette 2011/41)**

(54) **SWIMMER POSTURE ADJUSTMENT METHOD AND SWIMMER INFORMATION MEASUREMENT DEVICE USING SAME**

VERFAHREN ZUR EINSTELLUNG DER POSITION EINES SCHWIMMERS UND VORRICHTUNG ZUR SCHWIMMERINFORMATIONSMESSUNG DAMIT

PROCÉDÉ D'AJUSTEMENT DE POSITION DE NAGEUR ET DISPOSITIF DE MESURE D'INFORMATION SUR LE NAGEUR UTILISANT CE PROCÉDÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**13.02.2013 Bulletin 2013/07**

(73) Proprietors:
• **Wakayoshi, Koji**
**Otsu-shi, Shiga 520-0812 (JP)**
• **Yamamoto, Tomizo**
**Osaka-Shi, Osaka 544-0005 (JP)**

(72) Inventor: **WAKAYOSHI, Koji**
**Otsu-shi**
**Shiga 520-0812 (JP)**

(74) Representative: **Abel & Imray LLP**
**Westpoint Building**
**James Street West**
**Bath BA1 2DA (GB)**

(56) References cited:
**JP-U- 3 150 330**

• **Scott P Mclean ET AL: "Buoyancy, Gender, and Swimming Performance", JOURNAL OF APPLIED BIOMECHANICS, 31 December 2000 (2000-12-31), pages 248-263, XP055210739, Retrieved from the Internet: URL:http://citenpl.internal.epo.org/wf/storage/14F8D50130D000722DD/originalPdf [retrieved on 2015-09-02]**
• **BENJAMIN S. ROBERTS ET AL: "Effect of a FastSkinTM Suit on Submaximal Freestyle Swimming", MEDICINE & SCIENCE IN SPORTS & EXERCISE, vol. 35, no. 3, 1 March 2003 (2003-03-01), pages 519-524, XP055210730, ISSN: 0195-9131, DOI: 10.1249/01.MSS.0000053699.91683.CD**
• **MCLEAN, SCOTT P. ET AL.: 'Sex differences in the centre of buoyancy location of competitive swimmers' JOURNAL OF SPORTS SCIENCES vol. 16, no. 4, 04 June 1998, pages 373 - 383, XP008162378**
• **GAGNON, MICHELINE ET AL.: 'Technological development for the measurement of the center of volume in the human body' JOURNAL OF BIOMECHANICS vol. 14, no. 4, 1981, pages 235 - 241, XP026271506**

- **TORAHIKO MIYAHATA ET AL.: 'Furyoku no Chushin no Sokuteiho' PROCEEDINGS OF THE CONGRESS OF THE JAPANESE SOCIETY OF PHYSICAL EDUCATION vol. 24, 1973, page 196, XP008162368**

**Description**

Technical Field

The present invention relates to a method for adjusting a posture of a swimmer (swimmer posture) in water as a part of swimming training, and relates to a swimmer information measurement device used in the swimmer posture adjustment method.

Background Art

It is known that when, during swimming, a swimmer maintains horizontal body posture in the water, water resistance force acting on the body is reduced to enable the swimmer to swim efficiently and fast. However, when the swimmer maintains the streamlined gliding state in the water, the center of mass of the body of the swimmer is generally located on the toe tip side from the navel, and downward force acts at the center of mass, while the center of buoyancy is located slightly on the side of the head portion from the navel, and upward force acts at the center of buoyancy. Therefore, the center of mass location is deviated from the center of buoyancy location, and hence a rotational moment (rotational movement) is generated on the body of the swimmer as a whole, which causes the sinking of the legs. As a result, since the swimmer cannot maintain the horizontal posture in the water, the water resistance force is increased, and the swimmer cannot swim fast.

Therefore, in order to enable the swimmer to secure the horizontal posture in the water, it is preferred that the center of mass location and the center of buoyancy location be made as close to each other as possible so that the center of mass location and the center of buoyancy location are positioned on a same vertical line. This is because, when the center of mass location and the center of buoyancy location are positioned at the same point on the same vertical line, the rotational moment does not act on the body of the swimmer, and hence the swimmer can easily maintain the horizontal body posture.

The degree of deviation between the center of buoyancy location and the center of mass location of a swimmer is varied depending on the difference in the balance among the height, the weight, the body fat ratio, the amount of the residual air in the lungs, the shape of the lungs, and the like, of the swimmer. In order to estimate the deviation between the center of buoyancy location and the center of mass location, the following methods have been known as methods for measuring the distance between the center of mass and the center of buoyancy of a swimmer (see Non Patent Literatures 1 and 2). In any of the methods, first, the weight and the center of mass location are measured on the ground, and then the buoyant force and the center of buoyancy location in the water are measured.

(1) Measurement of position of center of mass (distance from toe tip to center of mass location ($X_1$))

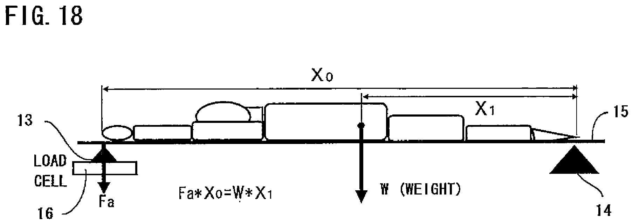

The measurement of the center of mass is performed by using the Reaction Board method. The weight (W) of a swimmer is measured beforehand, and then, as shown in Figure 18, the swimmer is made to lie in a downward-facing state with arms and legs stretched out (streamlined gliding posture) on a measurement board 15 which is installed horizontally on the ground, and the both ends of which are respectively supported by an upper half body supporting section 13 and a lower half body supporting section 14. Further, a measurement value (Fa) of a load cell 16 provided under the hand and the distance ($X_0$) from the toe tip to the fingertip are obtained. Then, the center of mass location ($X_1$) is calculated by substituting these values into the following expression (1).

$$Fa \cdot X_0 = W \cdot X_1 \quad \dots \quad (1)$$

(2) Measurement of buoyant force (B) and center of buoyancy location (distance from toe tip to center of buoyancy location ($X_2$))

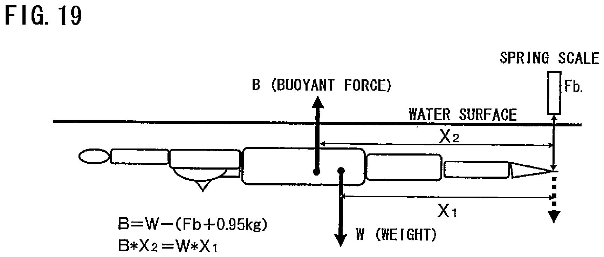

As shown in Figure 19, in the state in which the swimmer is made to take a downward-facing floating posture in the water, and in which the posture is stabilized by a belt (a weight of 0.96 kg) being wound around ankles of the swimmer, the force (Fb) applied to the ankles is measured, and then the buoyant force (B) is calculated by the following expression (2) using the known weight (W) and the load (Fb) applied to the ankles. In this case, the downward loads are the weight W and the load (0.95 kg) of the belt, and the upward loads are the buoyant force B and the load Fb.

$$B = W - Fb + 0.95 \text{ kg} \quad \dots \quad (2)$$

The center of buoyancy location $X_2$ is calculated by the following expression (3) using the calculated buoyant force (B) and the weight W. In this case, $X_1$ represents the distance (known value measured in (1)) from the toe tip to the center of mass location, and $X_2$ represents the distance (value to be obtained) from the toe tip to the center of buoyancy location. The upward rotational moment which is caused around the toe tip by the buoyant force, and the downward rotational moment which is caused around the toe tip by the weight acting at the center of mass location, are balanced with each other, and hence the following expression (3) is established.

$$B \cdot X_2 = W \cdot X_1 \quad ... \quad (3)$$

Citation List

Non Patent Literature

Non Patent Literature 1: Takeo Yamagishi, "Influence of the differences in the center of buoyancy and center of mass locations on the performance of the streamlined gliding", Master Thesis, Graduate School of Health and Sports Science, Juntendo University, 2008.
Non Patent Literature 2: SCOTT P. McLEAN, et al. "Sex differences in the centre of buoyancy location of competitive swimmers", Journal of Sports Sciences, 1998, 16, P373-383

Summary of Invention

Technical Problem

As described above, it is possible to obtain the center of mass and center of buoyancy locations, and the buoyant force of a swimmer. However, even when the deviation between the center of buoyancy location and the center of mass location is obtained from these values, it is difficult to immediately improve the swimming ability of the swimmer on the basis of this value. In beginners or masters class swimmers, since the deviation between the center of buoyancy location and the center of mass location is large, and since the strength of their abdominal muscles and back muscles is insufficient, it is difficult that they maintain horizontal posture in the water by making the center of buoyancy location close to the center of mass location close depending on their own sense. In athlete class swimmers, since their abdominal muscles and back muscles are developed, they can make the center of buoyancy location close to the center of mass location, and they can relatively easily take substantially horizontal posture in the water. However, in order to further improve their swimming ability and to improve their time record, it is required for them to take more perfect horizontal posture in the water. In athlete class swimmers who can take substantially perfect horizontal posture in the water, if they can intentionally shift the center of mass location from the center of buoyancy location, they can perform training for improving their swimming ability.

Therefore, an object of the present invention is to provide a swimmer posture adjustment method and a swimmer information measurement device using the swimmer posture adjustment method in which the center of mass location of a swimmer, and the center of buoyancy location of the swimmer in the water are measured and digitized, and in which, as a part of swimming training, the posture of the body of the swimmer in the water can be adjusted by adjustment means that is provided to increase or decrease the distance between the center of buoyancy location and the center of mass location according to the degree of separation between the center of buoyancy location and the center of mass location.

Solution to Problem

In order to achieve the above describe object, according to the present invention, the difference between the center of mass location and the center of buoyancy location of a swimmer is obtained, and further adjustment means, which, according to the obtained difference, can adjust the difference between the center of mass location and the center of buoyancy location of the swimmer, is adopted to enable the swimmer to perform more effective training. That is, according to the present invention, there is provided a swimmer posture adjustment method in which the center of mass location ($X_1$) of a swimmer, and the center of buoyancy location ($X_2$) and buoyant force (B) of the swimmer maintaining a streamlined gliding posture in a downward-facing floating state in the water, are obtained as swimmer information, and in which, on the basis of the swimmer information, a buoyant and detachable balancer is attached to the body of the swimmer to thereby enable the difference between the center of mass

location ($X_1$) and the center of buoyancy location ($X_2$) to be adjusted.

In a preferred embodiment, the balancer is made of an elastic foam body having a closed cell structure and is a supporter which can be attached to part of the body of the swimmer.

When the balancer is attached to the swimmer on the basis of the obtained swimmer information including the center of mass location ($X_1$), the center of buoyancy location ($X_2$), the buoyant force (B), and the like, the center of buoyancy location ($X_2$) and the buoyant force (B) of the swimmer are changed according to the kind and attaching position of the balancer, and hence the distance between the center of mass location ($X_1$) and a center of buoyancy location ($X_2$) is changed. When the center of mass location ($X_1$) and the center of buoyancy location ($X_2$) are made close to a same vertical line, the posture of the swimmer can be made close to the horizontal posture. When the center of mass location ($X_1$) and the center of buoyancy location ($X_2$) are made away from each other on the vertical line, a rotational moment is generated on the body of the swimmer, so as to cause the sinking of the legs. In this way, the posture of the swimmer in the water can be adjusted.

The balancer, which is a so-called buoyant member, is not a buoyant member which is used only for floating and which uses the buoyant force of the air enclosed therein as in the conventional ring buoy, an arm ring (arm ring buoy), and the like. Examples of the balancer include an elastic foam body made of rubber and having a closed cell structure, and the like. Specific examples of the balancer include clothing as a whole, or a part of the clothing, such as a swim suit, which is put on at the time of swimming, and a member (such as a supporter, and a floater wound around the arm or the body of the swimmer by using a string or a belt as attaching means) which can be attached to part of the body of the swimmer. Note that the kinds of the balancer, which will be described below, mean the differences in form and property, such as thickness, size, and material, which affect the buoyant force.

The kind and the attaching condition, such as the attaching position, of the balancer are changed depending on purposes. For example, in the case of swimmers, such as beginners or masters class swimmers, the distance between the center of buoyancy location and the center of mass location is large, and the strength of their abdominal muscles and back muscles is insufficient. Therefore, in order to help the swimmer maintain the horizontal posture in the water, the balancer is attached to the body of the swimmer under the condition (close approach condition) that the center of mass location ($X_1$) and the center of buoyancy location ($X_2$) are located close to each other on the same vertical line. The close approach condition is selected in such a manner that the swimmer information is obtained each time the kind and attaching position of the balancer is changed, and that the condition that the center of mass location ($X_1$) and the center of buoyancy location ($X_2$) are located close to each other on the same vertical line is found out from the obtained swimmer information.

In this way, the posture of the swimmer can be adjusted to the horizontal posture in the water by attaching the balancer to the swimmer under the close approach condition that the center of buoyancy location ($X_2$) and the center of mass location ($X_1$) of the swimmer are located close to each other on the same vertical line. When the swimmer maintains the horizontal body posture in the water, the resistance force of water against the body is reduced, and hence the swimmer can swim efficiently and fast. Further, when the swimmer repeats the swimming training under the close approach condition, the swimmer learns the sense of balance for maintaining the horizontal posture in the water, and hence the swimmer can maintain the horizontal posture in the water even after the balancer is removed from the body of the swimmer. This is similar to the case where, once a person, who cannot ride a bicycle, learns the sense of balance by riding a bicycle having an auxiliary wheel, the person can ride the bicycle without the auxiliary wheel. In this way, the swimmer, who have learned the sense of balance for maintaining the horizontal posture in the water, can swim fast even without the balancer, and hence the training using the balancer enables the swimmer to improve his or her swimming ability.

In the case of athlete class swimmers, since their abdominal muscles and back muscles are developed, they can relatively easily maintain a substantially horizontal posture in the water. When the swimmer performs the swimming training for making the center of buoyancy location ($X_2$) and the center of mass location ($X_1$) closer to each other on the same vertical line to maintain a more accurate horizontal posture in the water, the swimmer can improve his or her swimming ability similarly to the case described above. When the balancer is particularly attached under the condition (separation condition) that the center of mass location ($X_1$) and the center of buoyancy location ($X_2$) are separated from each other, the balancer can also be used for the training for strengthening arms and legs. Further, the balancer can also be used for the training for strengthening the muscles used for maintaining the horizontal posture in the water, and thereby the swimmer can further improve his or her ability to maintain the horizontal posture.

The separation condition is selected in such a manner that the swimmer information is obtained each time the kind and attaching position of the balancer is changed, and that the condition that the center of mass location ($X_1$) and the center of buoyancy location ($X_2$) are suitably separated from each other is found out from the obtained swimmer information.

Note that a known method may be adopted as the method for measuring the swimmer information including the center of mass location ($X_1$), the center of buoyancy location ($X_2$), and buoyant force (B) of the swimmer. However, it is preferred to adopt the following method.

The method for measuring the swimmer information according to the present invention includes the following steps (a) and (b).

(a) Center of mass location calculation step in which the center of mass location ($X_1$) of the swimmer is obtained on the ground.
(b) Buoyant force and center of buoyancy location calculation step in which the buoyant force (B) and the center of buoyancy location ($X_2$) of the swimmer in the water are obtained.

The step (a) described above is fundamentally the same as the measurement step (1) described in the paragraph of the background art. That is, the weight (W) of the swimmer is measured on the ground by a load cell. Further, in the state where the swimmer, horizontally stretching the body of the swimmer to maintain the streamlined gliding posture, is supported at two points, a load (Fa) of the swimmer is measured by a load sensor provided at one of the two supporting points, which is taken as a measurement point and which is separated by a predetermined distance ($X_0$) from the other supporting point. By substituting these values in the following expression (1), the center of mass location ($X_1$), which is the distance from the other supporting point to the center of mass of the swimmer is calculated.

$$Fa \cdot X_0 = W \cdot X_1 \quad \ldots \quad (1)$$

In step (b) described above, in the state where the upper half body and the lower half body of the swimmer, maintaining the streamlined gliding posture in the downward-facing floating state in the water, are respectively supported at two points between which the center of buoyancy and the center of mass of the swimmer are located, the upper half body load (F1) and the lower half body load (F2) are respectively measured by an upper half body load sensor and a lower half body load sensor. On the basis of these measured loads, the buoyant force (B) of the swimmer is obtained from relational expression (4). Then, the distance ($X_0$) between both the load measurement points is measured, and the center of buoyancy location ($X_2$) is obtained from relational expression (5).

$$B = W + F1 + F2 \quad \ldots \quad (4)$$

$$X_2 \cdot B + X_1 \cdot (-W) + X_0 \cdot (-F1) = 0 \quad \ldots \quad (5)$$

The load (F1) on the side of the upper half body and the load (F2) on the side of the lower half body are measured by the load sensors, respectively. Both the loads are measured in order to estimate the rotational movement of the body, which movement is caused due to the positional difference between the center of buoyancy location and the center of mass location. For this reason, it is only necessary that the measurement position of the load on the side of the upper half body is located on the head side from the center of buoyancy location, and that the measurement position of the load on the side of the lower half body is located on the side of the toe tip from the center of mass location.

It is preferred that the measurement position of the load on the side of the upper half body be set on the head side from the lung which influences the residual air amount. Especially, when the loads are measured in the state where the swimmer is in the horizontal and streamlined gliding posture in the water, it is preferred that the measurement position of the load on the side of the upper half body be set at the position of the hand. On the other hand, the measurement position of the load on the side of the lower half body may be set at a leg thigh portion when the measurement is performed in the state where the swimmer is in the horizontal and streamlined gliding posture in the water. However, it is considered that more accurate measurement results can be obtained when the loads are measured at both end portions of the swimmer maintaining the streamlined gliding posture. Therefore, it is preferred that the measurement position of the load on the side of the lower half body be set at the position of the toe tip.

However, in the above-described measurement method and the conventional measurement method, the buoyant force and the center of buoyancy location are not measured in consideration of parameters, such as the amount air in the lungs (hereinafter referred to as residual air amount). The residual air amount (Vc) greatly affects the buoyant force (B) and the center of buoyancy location ($X_2$). That is, when the residual air amount (Vc) is changed, the air amount in the body is naturally changed, and hence the buoyant force (B) is changed. When the buoyant force (B) is changed, the center of buoyancy location ($X_2$) which is necessary set so as to maintain the horizontal posture is also changed.

When the buoyant force (B) and the center of buoyancy location ($X_2$) are changed due to a change in the residual air amount (Vc), the following problems are caused. For example, when a swim suit or a supporter, in which a foam body is used, is put on, the buoyant force is adjusted, and thereby the horizontal posture of the swimmer can be adjusted. However, when the residual air amount (Vc) is taken into account, it is difficult to estimate the balancer attaching conditions, such as the size and kind of material of a balancer to be used, and a portion of the body of the swimmer, at which portion the balancer is to be attached in order to adjust the buoyant force (B) and the center of buoyancy location $(X_2)$ of the swimmer. In other words, even when the same balancer is attached at the same portion of the swimmer, the buoyant force (B) and the center of buoyancy location $(X_2)$ are changed according to the residual air amount (Vc), and hence accurate data for attaching the balancer cannot be obtained.

Therefore, in order to obtain the difference between the center of buoyancy location $(X_2)$ and the center of mass location $(X_1)$ at the same residual air amount (Vc), it is more preferred that the buoyant force (B) and the center of buoyancy location $(X_2)$ be calculated for each of the residual air amounts (Vc).

That is, the present invention provides a swimming posture adjustment method in which the center of mass location $(X_1)$ of a swimmer, the amount of residual air (Vc) in the lungs of the swimmer maintaining the streamlined gliding posture in the downward-facing floating state in the water, and the center of buoyancy location $(X_2)$ and the buoyant force (B) both corresponding to the amount of residual air are obtained as swimmer information, and in which, on the basis of the swimmer information, a buoyant and detachable balancer is attached to the body of the swimmer to thereby enable the difference between the center of mass location $(X_1)$ and the center of buoyancy location $(X_2)$ to be adjusted.

In this way, the buoyant force (B) and the center of buoyancy location $(X_2)$ are obtained in consideration of the residual air amount (Vc). Therefore, even when the attaching condition of the balancer is changed, each of the buoyant force (B) and the center of buoyancy location $(X_2)$ under one attaching condition can be accurately compared with each of the buoyant force (B) and the center of buoyancy location $(X_2)$ under the other attaching condition.

More specifically, in the above step (b), the load (F1) measured by the upper half body load sensor provided at the upper half body supporting section supporting the upper half body of the swimmer, or the load (F2) measured by the lower half body load sensor provided at the lower half body supporting section is set as an explanatory variable, and the residual air amount (Vc) of the swimmer, which amount is measured by the residual air amount measurement means, is set as an object variable. Then, for each of the loads, regression analysis is performed to obtain a regression expression corresponding to the residual air amount (Vc). The buoyant force (B) corresponding to the residual air amount (Vc) is calculated by substituting the regression expressions in relational expression (4). Further, the center of buoyancy location $(X_2)$ corresponding to the residual air amount (Vc) is calculated by substituting the buoyant force (B) and the regression expression of the upper half body load (F1) into relational expression (5).

$$Fa \cdot X_0 = W \cdot X_1 \quad \ldots \quad (1)$$

$$B = W + F1 + F2 \quad \ldots \quad (4)$$

$$X_2 \cdot B + X_1 \cdot (-W) + X_0 \cdot (-F1) = 0 \quad \ldots \quad (5)$$

That is, according to the study of the present inventors, it was confirmed that the regression expression of the upper half body load (F1) and the residual air amount (Vc), and the regression expression of the lower half body load (F2) and the residual air amount (Vc) each is expressed by a linear regression expression ($Y = aX + b$, where a represents the inclination of the regression line, and b is a constant representing the intercept). Therefore, it is seen from these correlations that the regression expression of "F1+F2" and the residual air amount (Vc) becomes a linear regression expression. The buoyant force (B) is calculated by substituting these regression expressions in relational expression (4). Then, the buoyant force (B) obtained in this way and the regression expression of the upper half body load (F1) are substituted into relational expression (5), and thereby the center of buoyancy location $(X_2)$ can be calculated.

In this way, the above-described invention is featured in that the residual air amount (Vc) is used as a parameter for calculation of the buoyant force and the center of buoyancy location. The posture of the swimmer can be accurately grasped by measuring the buoyant force (B) and the center of buoyancy location $(X_2)$ in correspondence with the residual air amount (Vc). Therefore, it is easy to estimate the balancer attaching conditions, such as the size and kind of material of a balancer to be used, and a portion of the body of the swimmer, at which portion the balancer is to be attached.

The residual air amount (Vc) can be calculated by measuring the lung capacity of the swimmer by a known spirometer. For example, the amount of air (amount of residual air) remaining in the lungs of the swimmer is measured in such a manner that, in the state where the mouthpiece attached to the spirometer is held in the mouth of the swimmer, the swimmer exhales all the air in the lungs.

In order to obtain the upper half body load (F1) and the lower half body load (F2) in correspondence with the residual air amount (Vc), the upper half body load (F1) and the lower half body loads (F2) are measured for each of the different residual air amounts. For example, immediately after the upper half body load (F1) and the lower half body loads (F2) are measured in the pool for measurement, the residual air amount (Vc) is measured by measuring the lung capacity with the spirometer installed at the poolside. This operation is repeated a plurality of times (for example, 15 times), and thereby the loads (F1, F2) respectively applied on the sides of the upper half body and the lower half body are measured at each of different residual air amounts (Vc).

Further, it is also possible to continuously perform the measurement of the upper half body load (F1) and the lower half body loads (F2) in the pool for measurement, and the measurement of the residual air amount (Vc) by the spirometer.

Further, in addition to the above, in the buoyant force and center of buoyancy location calculation step, the difference between the center of buoyancy location ($X_2$) calculated in this step, and the center of mass location ($X_1$) calculated in the center of mass location calculation step may be calculated.

Further, a swimmer information measurement device for use in the swimmer posture adjustment method comprises an upper half body supporting section and a lower half body supporting section which include therebetween the center of buoyancy and the center of mass of a swimmer maintaining the streamlined gliding posture in the downward-facing floating state in the water, and which respectively support the body of the swimmer at two points of the upper half body and the lower half body of the swimmer, an upper half body load sensor which measures the load (F1) acting at the upper half body supporting section, a lower half body load sensor which measures the load (F2) acting at the lower half body supporting section, residual air amount measurement means which measures a residual air amount (Vc) of the swimmer at the time of measurement of the loads, a storage section which stores the upper half body load (F1), the lower half body load (F2), the distance ($X_0$) between both the load measurement points, the residual air amount (Vc), and the previously measured weight (W) of the swimmer, arithmetic processing means which calculates the swimmer information, including buoyant force (B) and the center of buoyancy location ($X_2$), by calculation based on the upper half body load (F1), the lower half body load (F2), the distance ($X_0$) between both the load measurement points, and the residual air amount (Vc) that are stored in the storage section, and output means which outputs the swimmer information calculated by the arithmetic processing means.

The arithmetic processing means performs processing in which a regression expression is created by setting, as an explanatory variable, each of a set of a plurality of the upper half body loads (F1) and a set of a plurality of the lower half body loads (F2) that are stored in the storage section, and by setting, as an object variable, the residual air amounts (Vc) stored in the storage section, in which the following relational expression (4) stored beforehand in the storage section is called, and then the buoyant force (B) is calculated by substituting these regression expressions into relational expression (4), and in which the following relational expression (5) stored beforehand in the storage section is called, and the center of buoyancy location ($X_2$) is calculated by substituting the regression expressions of the buoyant force (B) and the upper half body load (F1) into the relational expression (5).

$$B = W + F1 + F2 \ldots (4)$$

$$X_2 \cdot B + X_1 \cdot (-W) + X_0 \cdot (-F1) = 0 \ldots (5)$$

Advantageous Effects of Invention

As can be seen from the above description, in the present invention, a balancer is attached to a swimmer on the basis of the swimmer information including the center of mass location ($X_1$), the center of buoyancy location ($X_2$), the buoyant force (B), and the like, and thereby the difference between the center of mass location and the center of buoyancy location can be adjusted. Therefore, the swimmer information can be not only obtained but also effectively used as swimming training means. Thereby, training corresponding to beginners or masters class swimmers and further training corresponding to athlete class swimmers can be performed by adjusting the kind and attaching position of the balancer.

Further, in the present invention, the posture of the swimmer can also be adjusted in consideration of the residual air amount, and hence more practical training can be performed.

Brief Description of Drawings

[Figure 1] Figure 1 is a view showing a configuration of a swimmer information measurement device according to the present invention.
[Figure 2] Figure 2 is a block diagram showing a functional configuration of the swimmer information measurement device according to the present invention.

[Figure 3] Figure 3 shows a data table representing measured values and calculated values in the case where a usual textile swim suit is put on.

[Figure 4] Figure 4 shows graphs represented as regression expressions by plotting calculated values calculated from the measured values shown in Figure 3.

[Figure 5] Figure 5 shows a data table representing measured values and calculated values in the case where a buoyant swim suit having a thickness of 1.5 mm is put on.

[Figure 6] Figure 6 shows graphs represented as regression expressions by plotting calculated values calculated from the measured values shown in Figure 5.

[Figure 7] Figure 7 shows a data table representing measured values and calculated values in the case where a buoyant swim suit having a thickness of 3 mm is put on.

[Figure 8] Figure 8 shows graphs represented as regression expressions by plotting calculated values calculated from the measured values shown in Figure 7.

[Figure 9] Figure 9 shows a data table representing measured values and calculated values in the case where a buoyant swim suit having a thickness of 5 mm is put on.

[Figure 10] Figure 10 shows graphs represented as regression expressions by plotting calculated values calculated from the measured values shown in Figure 9.

[Figure 11] Figure 11 shows a data table representing values of differences $(X_2-X_1)$ between the center of mass location and the center of buoyancy location corresponding to the residual air amount.

[Figure 12] Figure 12 shows graphs each representing a correlation of the residual air amount and the difference $(X_2-X_1)$ between the center of buoyancy location and the center of mass location.

[Figure 13] Figure 13 is a view showing a state where a balancer is attached.

[Figure 14] Figure 14 is a view showing the balancer.

[Figure 15] Figure 15 is another view showing a state where a balancer is attached.

[Figure 16] Figure 16 is another view showing a state where a balancer is attached.

[Figure 17] Figure 17 is a view showing a configuration of another form of the swimmer information measurement device.

[Figure 18] Figure 18 is a view showing a method for measuring the center of mass location.

[Figure 19] Figure 19 is a view showing a conventional method for measuring the center of buoyancy location.

Description of Embodiments

In the following, embodiments according to the present invention will be described with reference to the accompanying drawings. According to the present invention, there is provided a swimmer posture adjustment method in which the center of mass location $(X_1)$ of a swimmer, the amount of residual air $(Vc)$ in the lungs of the swimmer maintaining a streamlined gliding posture in a downward-facing floating state in the water, and the center of buoyancy location $(X_2)$ and buoyant force $(B)$ corresponding to the residual air amount are obtained as swimmer information, and in which the difference between the center of mass location $(X_1)$ and the center of buoyancy location $(X_2)$ can be adjusted in such a manner that a buoyant and detachable balancer is attached to the body of the swimmer on the basis of the swimmer information. First, in the swimmer posture adjustment method, a device 1 used for measuring the swimmer information is described.

The swimmer information measurement device 1 is configured such that the buoyant force $(B)$ and the center of buoyancy location $(X_2)$ are calculated on the basis of the measured data, such that the calculated data are compared with the center of mass location $(X_1)$ measured and calculated beforehand, and such that, on the basis of the comparison result, the balancer is attached to a swimmer A (to be tested) so that the horizontal posture of the swimmer A is adjusted so as to enable the swimmer A to swim efficiently and faster. Further, the swimmer information measurement device 1 is used for developing clothing, such as a swim suit, which enables the swimmer to improve swimming techniques. Of course, the swimmer information measurement device 1 may be used for other purposes.

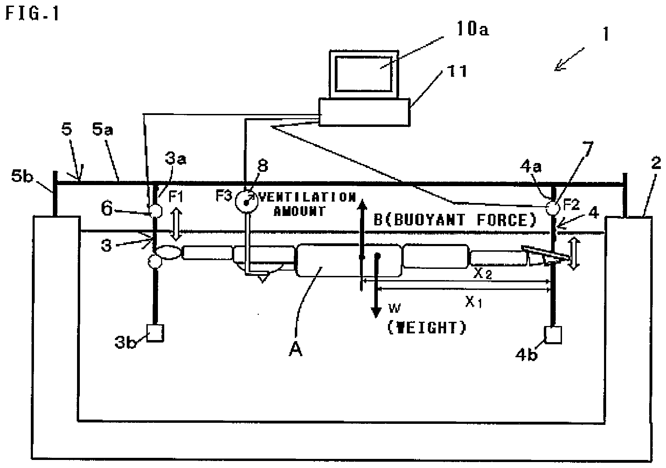

As shown in Figure 1, the swimmer information measurement device 1 measures and calculates the buoyant force $(B)$ and the center of buoyancy location $(X_2)$ at the time when the swimmer maintains the horizontal posture or the swimming posture in running water or still water in a tank 2, such as a pool.

As shown in Figure 1, the swimmer information measurement device 1 includes an upper half body supporting section 3 and a lower half body supporting section 4 between which the center of buoyancy and the center of mass of the swimmer are located, and which respectively support the body of the swimmer at two points of the upper half body and the lower half body so as to enable the swimmer to maintain the horizontal posture in the water, a holding body 5 which holds the upper half body supporting section 3 and the lower half body supporting section 4, an upper half body load sensor 6 which measures the load $(F1)$ acting at the upper half body supporting section 3, a lower half body load sensor 7 which measures the load $(F2)$ acting at the lower half body supporting section 4, residual air amount measurement means 8 which measures the amount of residual air (Vc) of the swimmer at the time of measurement of the loads, a storage section 12 which stores various data, an arithmetic processing section 9 which calculates the swimmer information, including buoyant force (B) and the center of buoyancy location ($X_2$), on the basis of the various data stored in the storage section 12, and output means 10a and 10b which output the swimmer information calculated by the arithmetic operation means.

The storage section 12 and the arithmetic processing section 9 are incorporated in a computer 11. The load information from the upper half body load sensor 6, the load information from the lower half body load sensor 7, and the residual air amount measurement information of the swimmer are inputted into the input side of the computer 11.

The various data stored in the storage section 12 include information on the upper half body load (F1) from the upper half body load sensor 6, information on the lower half body load (F2) from the lower half body load sensor 7, and the residual air measurement information

(Vc) of the swimmer. In addition to these kinds of information, information on the swimmer's weight (W) measured beforehand, and information on the center of mass location ($X_1$) obtained by calculation are inputted into the storage section 12. The detailed configuration of the computer 11 will be described below.

The information on the weight (W) and the information on the center of mass location ($X_1$), which are inputted into the storage section 12, are outputted by a weight and center of mass location measurement device attached to the swimmer information measurement device, or are outputted by a measurement device provided separately from the swimmer information measurement device.

The weight (W) is used mainly for calculating the center of mass location ($X_1$) of the swimmer. The weight (W) can be measured not in the water but on the ground by using the weight and center of mass location measurement device, or a separate weight meter (or load cell). The weight meter (load cell) is known.

The information on the center of mass location ($X_1$) can be obtained by the center of mass location measurement device as shown in Figure 18 similarly to the conventional case. For example, as shown in Figure 18, in the center of mass location measurement device, the measurement of the center of mass is performed by using the Reaction Board method. The center of mass location measurement device includes the measurement board 15 which is installed horizontally on the ground, and the both ends of which are respectively supported by the upper half body supporting section 13 and the lower half body supporting section 14, and the load cell 16 which is provided at one of the supporting sections (for example, at the upper half body supporting section 13) of the measurement board 15. The upper half body supporting section 13 is provided under the hand, and the lower half body supporting section 14 is provided under the toe tip.

For the measurement of the center of mass location ($X_1$), the swimmer is made to lie on the measurement board 15 so as to take a streamlined gliding posture in a downward facing state with the body of the swimmer horizontally stretched out. The weight (W) of the swimmer is measured beforehand, and also the load (for example, load Fa applied on the side of the upper half body) applied on one of the supporting sections 13 and 14, which respectively support the lower half body and the upper half body of the swimmer, is measured by the load cell 13. The center of mass location ($X_1$) is calculated by the following expression (1) using the distance ($X_0$) between the two supporting points on the measurement board 15, the load (Fa) on the side of the upper half body, and the weight (W). The following expression (1) is an equality expression which is established because the values (rotational moments), each of which is obtained by multiplying a force applied at each of application points by the distance between the each of the application points and the common supporting point, are equal to each other. Note that the center of mass location ($X_1$) means the distance from the center of mass to the supporting point on the side opposite to the measurement point of the load cell (the supporting point on the side of the lower half body in Figure 18).

$$\mathrm{Fa} \cdot X_0 \ = \ W \cdot X_1 \ \ldots \ (1)$$

The weight (W) of the swimmer can also be measured by using another measurement device. However, in the measurement device shown in Figure 18, when a load cell is arranged at each of the supporting points on the side of the upper half body and on the side of the lower half body, the weight (W) is obtained as the sum of the load (Fa) on the side of the upper half body and the load (Fb) on the side of the lower half body. Therefore, the following expression is established. However, the weight (W2) of the measurement board 15 is taken into consideration in the following expression.

$$\mathrm{Fa} \ + \ \mathrm{Fb} \ - \ W2 \ = \ W$$

Note that the measurement device, which can measure the weight (W) in addition to the center of mass location, functions as a weight and center of mass location measurement device.

In the weight and center of mass location measurement device, although not illustrated, the center of mass

location ($X_2$) can be calculated by using the computer. For example, the computer includes an interface (serial port) into which the input information of the weight W and the load is inputted, a storage section which stores the input information that includes the weight and the load and is inputted into the interface, an arithmetic processing section which calculates the center of mass location ($X_1$) by the previously inputted expression (1) using the input information stored in the storage section, and an output processing section which performs control to allow the information on the center of mass location calculated by the arithmetic processing section to be outputted to output means, such as a printing section to perform printing, and a display section, such as a monitor.

As the method for inputting the input information, such as the weight W and the load, it is possible to adopt any of the method in which the information measured by the weight meter and the load cell is inputted via an operation section (input means), such as a keyboard, or of the method in which the measured values measured by the weight meter and the load cell are inputted into the interface of the computer via a signal line.

In addition, it is also possible that the information about the swimmer A, such as the height and the body fat ratio, is measured beforehand as necessary information, so as to be inputted and stored in the center of mass location measurement device and/or the swimmer information measurement device.

As shown in Figure 1, the upper half body supporting section 3 and the lower half body supporting section 4, which respectively support the upper half body and the lower half body of the swimmer at two points including therebetween the center of buoyancy and the center of mass of the swimmer, are supported by the holding body 5 so as to enable the swimmer to maintain a horizontal posture in the water. In consideration of the use form of the measurement pool 2, the form in which the swimmer information measurement device 1 is detachably attached to the pool 2 is adopted, instead of the form in which the swimmer information measurement device 1 is fixed to the pool 2. The detachable form is adopted, and hence a hanging system, in which both the supporting sections are hung by the holding body 5, is adopted in order to enable the swimmer information measurement device 1 to be easily attached and detached to and from the pool 2.

The holding body 5 includes a rod-shaped bar 5a which horizontally extends in the front-rear direction above the pool 2, and the support posts 5b which are respectively installed at the pool side to support the front and rear ends of the bar 5a. As the bar 5a and the support post 5b, it is possible to use various materials, such as a metal material such as stainless steel, a synthetic resin material, and a wood material, which materials enable the strength of the bar 5a and the support post 5b to be secured. As the support post 5b, a poolside ladder for up and down movement may be used.

The upper half body supporting section 3 and the lower half body supporting section 4 respectively support the upper half body and the lower half body of the swimmer so that the center of buoyancy and the center of mass of the swimmer in the water are located between the upper half body supporting section 3 and lower half body supporting section 4. As for the form of supporting the swimmer's body in the water, the system, in which the swimmer's body is lifted and supported from the bottom of the pool, is not adopted, but the system, in which the swimmer's body is hung from the above, is adopted. String-shaped hanging bodies 3a and 4a are hung from the rod-shaped bar 5a, and the lower end sides of the hanging bodies 3a and 4a are respectively used as the supporting sections 3 and 4.

In this example, the upper half body supporting section 3 is arranged so as to support the hand of the swimmer A. The lower half body supporting section 4 is arranged so as to support the toe tip of the swimmer. For this reason, a rod-shaped handle is used as the upper half body supporting section 3, and sandal-shaped footwear is arranged as the lower half body supporting section 4 because it is preferred to fix the toe tip. Since the height of the swimmer is different for each of the swimmers, it is necessary to adjust the distance between the supporting sections 3 and 4. For this reason, the string-shaped hanging body is made freely movable along the bar 5a. Further, each of the hanging bodies 3a and 4a has a string shape, and hence weights 3b and 4b are respectively provided at the lower ends of the hanging bodies 3a and 4a in order to stabilize the hanging bodies 3a and 4a in the water. In this way, the upper half body supporting section 3 and the lower half body supporting section 4 hold the swimmer so as to enable the swimmer to maintain the streamlined gliding posture in the downward-facing floating state in the water. Note that the material of the hanging bodies 3a and 4a is not limited to a string, and the other material, such as a metal rod, may be used.

It is preferred that each of the load sensors 6 and 7, which respectively measure the loads applied at both the supporting sections 3 and 4, be installed at an intermediate position of each of the hanging bodies 3a and 4a and above the water line (water surface). This is because very small current, as an electric signal of the load information, flows from each of the load sensors 6 and 7, so as to be inputted into the computer of the swimmer information measurement device. However, when each of the load sensors 6 and 7 has excellent waterproof property, and when the load displacement is not taken out as an electric signal but the load is detected as distortion or pressure by using a distortion sensor, a pressure sensor, or the like, the load sensors 6 and 7 may be installed in the water.

In this example, as each of the load sensors 6 and 7, for example, a load sensor, which is capable of measuring both tension and compression loads, is used to measure both compressive and tensile forces applied to each of the supporting sections 3 and 4. Further, a spring scale for visually measuring physical displacement may also be used as the load sensor.

11

The information outputted from the load sensors 6 and 7 is inputted into the computer 11 of the swimmer information measurement device. Further, the load information may also be inputted into the computer 11 from the operation section (input means), such as a keyboard.

Note that the supporting positions of the upper half body supporting section 3 and the lower half body supporting section 4 are not limited to the hand and the toe tip, and the upper half body supporting section 3 and the lower half body supporting section 4 may also be arranged so as to support the swimmer's body at the other positions as long as the swimmer's body is supported at two points of the upper half body and the lower half body, between which two points the center of buoyancy and the center of mass of the swimmer are located. Here, it is preferred to provide the upper half body supporting section 3 at the hand of the swimmer, because the swimmer can grasp the upper half body supporting section and hence the fixing method of the swimmer is simplified.

The weight of each of the weights 3b and 4b is set to, for example, about 4 kg or about 2 kg in order to stabilize the upper half body supporting section 3 and the lower half body supporting section 4. The weight of each of the weights 3b and 4b is applied to each of the upper half body load sensor 6 and the lower half body load sensor 7, and hence is negatively corrected at the time of measurement.

Further, in the measurement device of this example, a spirometer 8 which can measure the lung volume is provided as the residual air amount measurement means 8 which measures the amount of residual air in the lungs. The measurement device of this example is featured in that the buoyant force and the center of buoyancy location ($X_2$) corresponding to a predetermined residual air amount are accurately calculated by using the residual air amount as a parameter.

The load (F1) on the side of the upper half body, and the load (F2) on the side of the lower half body are measured for each of the different residual air amounts. For example, immediately after the loads (F1, F2) respectively applied on the sides of the upper half body and the lower half body are measured in the pool for measurement, the lung capacity is measured by using the spirometer installed at the poolside, so that the residual air amount (Vc) is measured. The loads (F1, F2) respectively applied on the sides of the upper half body and the lower half body are measured at each of different residual air amounts (Vc) by repeating this operation a plurality of times (for example, 15 times).

Note that, in the pool for measurement, the loads (F1, F2) respectively applied on the sides of the upper half body and the lower half body, and the residual air amounts (Vc) can be continuously measured at the same time in such a manner that the main body of the spirometer is installed at the poolside, and the extended mouthpiece is held in the mouth of the swimmer, or in such a manner that the main body of the spirometer is supported by the holding body 5, and the mouthpiece is held in the mouth of the swimmer.

The structure of the spirometer 8 is known and hence is not illustrated. The amount of air (amount of residual air) remaining in the lungs of the swimmer A is measured in such a manner that, in the state where the mouthpiece attached to the spirometer 8 is held in the mouth of the swimmer, the swimmer exhales all air in the lungs while taking care to prevent leakage of air through the nose by attaching a clip, and the like, to the nose. The data of the residual air amount is taken out as an electric signal, so as to be inputted into the computer 11 of the swimmer information measurement device. Alternatively, the measured data of the residual air amount may also be inputted into the computer 11 from the operation section (input means), such as a keyboard.

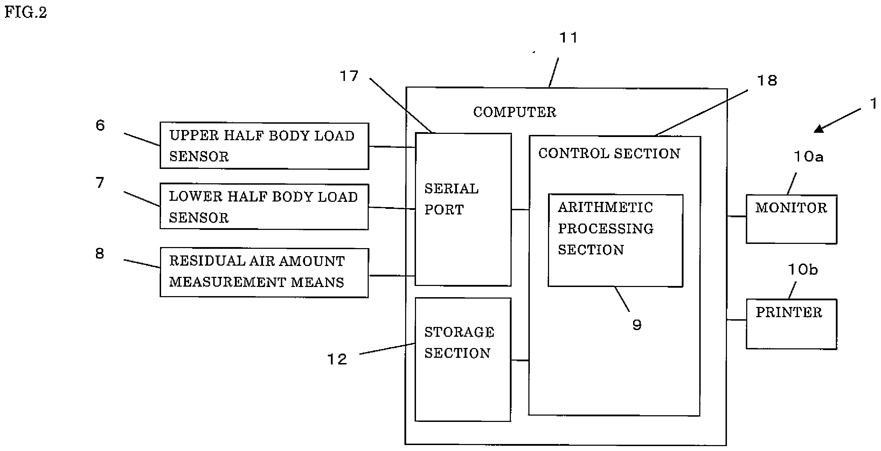

As shown in Figure 2, the computer 11 provided in the swimmer information measurement device includes input means, such as the respective sensors (the upper half body load sensor 6, the lower half body load sensor 7, and the spirometer 8), a serial port 17 for transmitting and receiving data, a RAM (Random Access Memory) used to store data of a CPU (Central Processing Unit) and data in the middle of the arithmetic operation performed by the CPU, and a ROM (Read Only Memory) for storing the program and various arithmetic expressions and the like to be executed by the CPU, etc. Further, the computer 11 also includes a control section 18 for controlling the operation of the computer 11 as a whole, and the storage section 12, such as an HD and a non-volatile RAM, for storing the measured results acquired by the control section 18 from each of the sensors 6, 7 and 8.

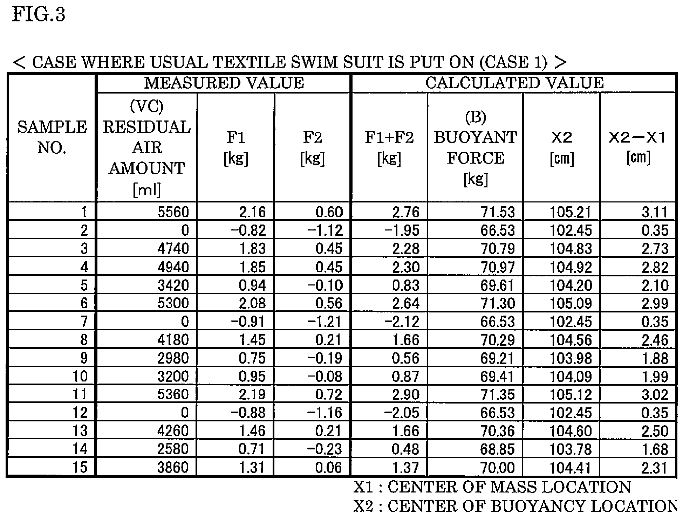

The storage section 12 stores tables shown, for example, in Figure 3, Figure 5, Figure 7, Figure 9 and Figure 11. An area for storing the various arithmetic expressions, and the like, which are stored in the ROM, may be provided in the storage section 12 instead of the ROM. In this example, as will be described below, the buoyant force (B) and the center of buoyancy location ($X_2$) are calculated for each swimmer by using various regression expressions using, as parameters, the loads (F1, F2) and the residual air amount (Vc). Therefore, only a basic linear regression expression (Y = aX + b: where Y represents a load, X represents a residual air amount, a represents the inclination of a regression line, and b is a constant representing the intercept) is stored in the ROM, and linear regression expressions for respective swimmers are stored in the storage section 12.

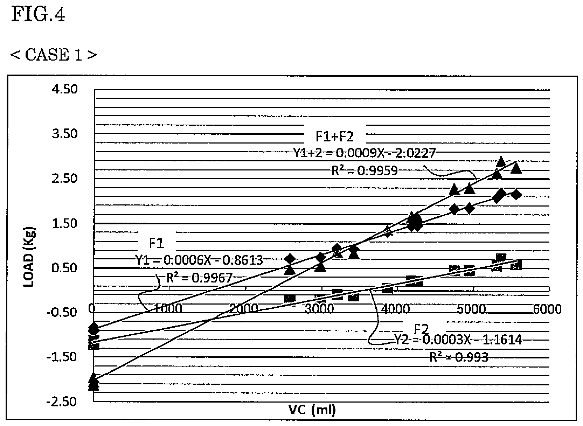

Further, the control section 18 includes the arithmetic processing section 9 which performs arithmetic processing of the information stored in the storage section 12 for storing the measured signals from the respective sensors 6, 7 and 8. Further, the monitor 10a which displays the results of the arithmetic operation, and the printer 10b which prints out the results of the arithmetic operation are connected to the output side of the control section 18. For example, the graphs shown in Figure 4, Figure 6, Figure 8, Figure 10 and Figure 12 are outputted from the monitor 10a and the printer 10b.

The measurement function of the computer 11 is started, and then, according to the operation of the operator of the computer 11, the control section 18 requires, via the serial port 17, the sensors 6, 7 and 8 to transmit measured signals. Specifically, the operator of the computer 11 inputs, as information about the swimmer A, name, ID number, sex, height, weight, body fat ratio, center of mass location, date of birth, and the like. The information is stored in the storage section 12.

Then, via the serial port 17, the control section 18 requires each of the sensors 6, 7 and 8 to transmit measured signals. Then, each of the sensors 6, 7 and 8 are operated, and the information of measured signals is inputted into the serial port 17. The information is temporarily stored in the storage section 12.

The arithmetic processing section 9 performs arithmetic operation based on the information temporarily stored in the storage section 12, to calculate the swimmer information, such as the buoyant force, and the center of buoyancy location. The following relational expression (4) and relational expression (5) are stored, for example, in the storage section 12.

$$B = W + F1 + F2 \quad \ldots \quad (4)$$

Relational expression (4) is a relational expression among the upper half body load (F1), the lower half load (F2), the weight (W), and the buoyant force (B). The balance of forces, which are balanced at the time when the swimmer maintains the horizontal posture in the water, are taken into consideration in relational expression (4). In expression (4), the difference between the buoyant force (B) and the weight (W) is expressed as a load (F1+F2). When the upward force acting at each point is expressed as positive, and when the downward force acting at each point is expressed as negative, the buoyant force (B) can be obtained.

$$X_2 \cdot B + X_1 \cdot (-W) + X_0 \cdot (-F1) = 0 \quad \ldots \quad (5)$$

Relational expression (5) is a relational expression among the upper half body load (F1), the weight (W), the buoyant force (B), the distance ($X_0$) between both the load measurement points, the center of mass location ($X_1$), and the center of buoyancy location ($X_2$). Relational expression (5) indicates that, when the swimmer maintains the horizontal posture in the balanced state in the water, the total sum of values (rotational moments), each of which is obtained by multiplying a force applied at an application point by the distance between the application point and the common supporting point, become zero. In the expression (5), the upward force is defined as positive, and the downward force is defined as negative.

In the arithmetic processing section 9, regression analysis is performed by using expression (4) and expression (5) in such a manner that the measured load (F1) or (F2) is set as an explanatory variable, and that the residual air amount (Vc) is set as an object variable. As a result, the regression expression representing the correlation between the upper half body load (F1) and the residual air amount (Vc), and the regression expression representing the correlation between the lower half body load (F2) and the residual air amount are derived. Thereby, the buoyant force (B) and the center of buoyancy location ($X_2$) are derived.

According to the study of the present inventors, it was confirmed that each of the regression expression of the upper half body load (F1) and the residual air amount (Vc), and of the regression expression of the lower half body load (F2) and the residual air amount (Vc) is expressed by a linear regression expression ($Y = aX + b$, where Y represents a load, X represents a residual air amount, a represents the inclination of a regression line, and b is a constant representing the intercept). Therefore, it is seen from these correlations that the regression expression of "F1+F2" and the residual air amount (Vc) becomes a linear regression expression.

The arithmetic processing method in the arithmetic processing section 9 will be specifically described below. For example, when regression analysis is performed by setting the upper half body load (F1) or the lower half body load (F2) as an explanatory variable, and by setting the residual air amount (Vc) as an objective variable, regression expressions are respectively obtained as follows.

(Regression expression of upper half body load (F1) and residual air amount (Vc))

When the upper half body load F1 ($Y_1$) is set as an object variable, and when the residual air amount Vc(X) is set as an explanatory variable, the following linear regression expression (12) is obtained.

$$Y_1 = a_1X + b_1 \text{ (where } a_1 \text{ represents the inclination of the regression line, } b_1 \text{ is a constant representing the intercept)} \ldots (12)$$

(Regression expression of lower half body load (F2) and residual air amount (Vc))

When the lower half body load F2 ($Y_2$) is set as an object variable, and when the residual air amount Vc(X) is set as an explanatory variable, the following linear regression expression (13) is obtained.

$$Y_2 = a_2X + b_2 \text{ (where } a_2 \text{ represents the inclination of the regression line, } b_2 \text{ is a constant representing the intercept)} \ldots (13)$$

(Regression expression of F1 + F2 and residual air amount (Vc))

When F1+F2 ($Y_{1+2}$) is set as an object variable, and when the residual air amount (X) is set as an explanatory variable, the following linear regression expression (14) is obtained.

$$Y_{1+2} = a_{1+2}X + b_{1+2} \text{ (where } a_{1+2} \text{ represents the inclination of the regression line, } b_{1+2} \text{ is a constant representing the intercept)} \ldots (14)$$

The buoyant force (B) is obtained by using expression (14). Further, the center of buoyancy location ($X_2$) is obtained by using expression (12) and expression (14).

(Calculation method of buoyant force (B))

Next, the buoyant force (B) is obtained. When the weight of the swimmer A is set as W, the following expression (4) is established.

$$B = W + F1 + F2 \ldots (4)$$

When expression (14) is substituted into expression (4), the following expression (15) is derived. By expression (15), the buoyant force (B) corresponding to the residual air amount Vc can be calculated.

$$B = W + (a_{1+2}X + b_{1+2}) \ldots (15)$$

(Calculation method of center of buoyancy location ($X_2$))

Further, as for the center of buoyancy location ($X_2$), when the position, at which the legs are fixed by the lower half body supporting section 4, is set as a fulcrum, the forces applied to the body are limited to the buoyant force, the weight, and F1, and hence the following relational expression (5) is established.

$$X_2 \cdot B + X_1 \cdot (-W) + X_0 \cdot (-F1) = 0 \ldots (5)$$

When expression (12) is substituted into expression (5), the following expression is established (16).

$$X_2 = (X_1 \cdot W + X_0 \cdot (a_1 X + b_1)) / (W + (a_{1+2} X + b_{1+2})) \ldots$$

$$(16)$$

From expression (16), the center of buoyancy location corresponding to the residual air amount can be obtained. Note that the constants a and b, which respectively represent the inclination (a) and the intercept (b) in expressions (12) to (16) described above, are changed according to the difference between the swimmers and according to the difference between the balancer attaching conditions.

The calculation results in the arithmetic processing section 9 are stored in the storage section 12. The measurement results stored in the storage section 12 can be displayed in the monitor or printed output according to the operation of the operator of the computer 11.

Further, the difference between the center of buoyancy location ($X_2$) and the center of mass location ($X_1$) is calculated in the arithmetic processing section 9. The calculation result is stored in the storage section 12.

As described above, in the swimmer information measurement device 1 of the present invention, the value of the residual air amount (Vc), which affects the values of the buoyant force (B) and the center of buoyancy location ($X_2$), is taken into account in the calculation, and thereby the buoyant force (B) and the center of buoyancy location ($X_2$) are calculated in correspondence with the residual air amount (Vc), so that the accuracy of the measured values can be increased. Therefore, when, while the attaching condition of a balancer 20 is changed, the buoyant force and the center of buoyancy location under each of the attaching conditions are respectively compared with the buoyant force and the center of buoyancy location under the other attaching conditions, the comparison of the measured values of the buoyant force and the center of buoyancy location can be performed with high accuracy. In this way, the accurate distance between the center of mass location and the center of buoyancy location is obtained in consideration of the residual air amount, and hence the swimmer information measurement device 1 of the present invention provides a more practical method of adjusting the posture of the swimmer as compared with the case where the posture of the swimmer is adjusted by reducing or increasing the distance between the center of mass location and the center of buoyancy location.

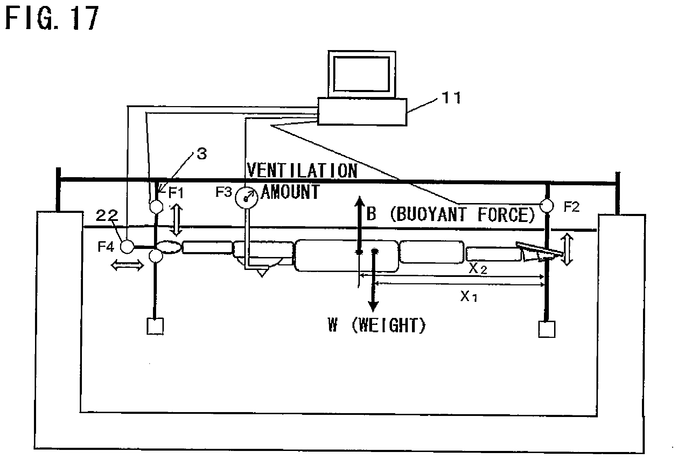

Note that, as shown in Figure 17, in the swimmer information measurement device 1 of the present invention, a water flow load sensor 22 can be provided in addition to the above-described configuration. The water flow load sensor 22 is provided in front of the upper half body supporting section 3. A compression type load sensor is used as the water flow load sensor 22, so as to measure a load applied from the front side, that is, the load by the water flow. The water flow load sensor 22 is connected to the computer 11. With this configuration, the changes of the buoyant force and of the center of buoyancy location, which depend on the rate of water flow, can be measured.

Further, in the above-described embodiment, the residual air amount measurement means 8 is provided, so that the value of the residual air amount (V c) is taken into account in the calculation of the swimmer information. However, the buoyant force (B) and the center of buoyancy location ($X_2$) may also be obtained by using the conventional measurement method, such as the measurement step (2) described in association with the background art of the present invention, in which method the residual air amount (Vc) is not taken into account. Further, without the residual air amount (Vc) being taken into account, the buoyant force (B) is obtained from relational expression (4) based on the weight (W), the upper half body load (F1), and the lower half body load (F2). Then, the center of buoyancy location ($X_2$) may be obtained from relational expression (5) based on the buoyant force (B), the weight (W), the distance ($X_0$) between both the load measurement points, and the lower half body load (F2).

$$B = W + F1 + F2 \ldots (4)$$

$$X_2 \cdot B + X_1 \cdot (-W) + X_0 \cdot (-F1) = 0 \ldots (5)$$

Further, a method for adjusting the posture of the swimmer A can be provided by using the buoyant balancer 20 and the swimmer information measurement device 1 configured as described above. That is, a method for adjusting the posture of the swimmer A is provided, in which the center of mass location ($X_1$) and the residual air amount (Vc) in the lungs of the swimmer A, and the center of buoyancy location ($X_2$) and the buoyant force (B) both corresponding to the residual air amount (Vc) are obtained as the swimmer information by using the swimmer information measurement device 1, and in which, on the basis of the swimmer information, the buoyant and detachable balancer is attached to the body of the swimmer to thereby change the difference between the center of mass location ($X_1$) and the center of buoyancy location ($X_2$).

The balancer 20, which is a so-called buoyant member, is not a buoyant material which uses, only for floating, the buoyant force of the air enclosed therein as in the conventional ring buoy, an arm ring (arm ring buoy), and the like, but is, so to speak, a buoyant force adjustment member. Example of the balancer 20 includes an elastic foam body made of rubber and having a closed cell structure capable of easily generating suitable buoyant force. Specific examples of the balancer 20 include clothing, such as a swim suit, a or a part of the clothing which is put on at the time of swimming, and a member which can be attached to part of the body of a swimmer (a supporter, and a floater wound around the arms or the body of a swimmer by a string or a belt).

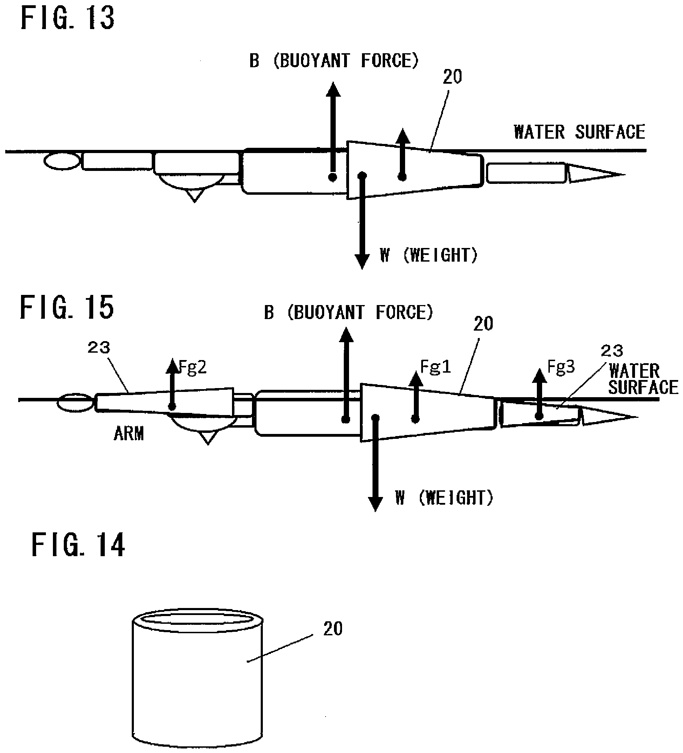

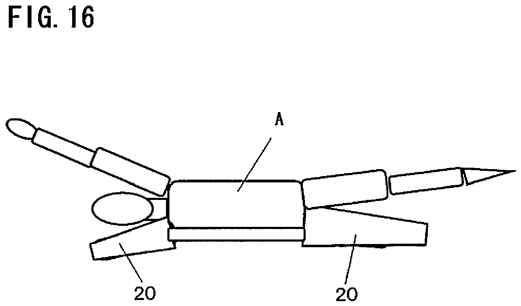

Further, the kinds of the balancer 20 mean the differences in property and form, such as thickness, size, and material, which affect the buoyant force. Further, as for the change in the attaching position of the balancer 20, for example, the attaching position of the balancer is changed between the case where a spats type swim suit is put on as shown in Figure 13, and the case where a wet suit covering the whole body is put on. Even when a spats type swim suit is put on, the attaching position of a balancer is changed depending on the difference in the length between a swim suit covering the leg as a whole and a swim suit covering a part of the leg. Further, even when a supporter as shown in Figure 14 is wound around the arm or the leg in addition to wearing of the spats type swim suit, the attaching position of the balancer is changed. Further, as shown in Figure 16, for a swimmer who has lost a hand or a leg, the balancer 20 can be attached to the root of the lost portion to compensate the buoyant force of the lost portion, and thereby the posture of the swimmer can be adjusted. It is only necessary that the center of buoyancy location ($X_2$) is measured in each of the attaching conditions, so as to estimate the difference between the center of mass location ($X_1$) and the center of buoyancy location ($X_2$).

The attaching condition, such as the kind and attaching position, of the balancer is changed for each purpose. For example, in the case of a swimmer, such as beginners or masters class swimmers, the distance between the center of buoyancy location and the center of mass location is large, and the strength of their abdominal muscles and back muscles is insufficient. Therefore, the swimmer is helped to maintain the horizontal posture in the water in such a manner that the balancer is attached to the body of the swimmer so as to realize the close approach condition that the center of mass location ($X_1$) and the center of buoyancy location ($X_2$) are made close to each other to the same vertical line. The close approach condition is selected in such a manner that the swimmer information is obtained each time the kind and attaching position of the balancer is changed, and that a suitable condition that the center of buoyancy location ($X_2$) and the center of mass location ($X_1$) are made close to the same vertical line is found out from the obtained swimmer information. In this way, the balancer 20 in this case is used to make the center of buoyancy location and the center of mass location of the swimmer A closer to the same vertical line, so as to enable the swimmer A to maintain the horizontal posture in the water.

When the balancer is attached to the swimmer under the close approach condition that the center of buoyancy location ($X_2$) and the center of mass location ($X_1$) are made close to the same vertical line, the posture of swimmer can be adjusted to the horizontal posture. When the swimmer maintains the horizontal body posture in the water, the resistance force of water against the body is reduced, and hence the swimmer can swim efficiently and fast. Further, when the swimmer repeats the practice of swimming under the close approach condition, the swimmer learns the sense of balance for maintaining the horizontal posture in the water, so that the swimmer can maintain the horizontal posture in the water, even after the balancer is removed from the body of the swimmer. The swimmer, who has learned the sense of balance for maintaining the horizontal posture in this way, can swim fast even without the balancer, and hence the training method using the balancer enables the swimmer to improve his or her swimming ability.

By use of the data obtained in this way, it is possible to enable a swimmer to swim faster and more efficiently. Further, it is possible to develop a material which enables a swimmer to further improve his or her swimming ability, and also it is possible to develop the balancer 20, such as a swim suit, using the material.

In the case of athlete class swimmers, since their abdominal muscles and back muscles are developed, they can relatively easily maintain a substantially horizontal posture in the water. When a swimmer performs the swimming training to maintain a more accurate horizontal posture so that the center of buoyancy location ($X_2$) and the center of mass location ($X_1$) are made closer to a same vertical line, the swimmer can improve his or her swimming ability similarly to the case described above. Further, when the balancer is particularly attached under the separation condition that the center of mass location ($X_1$) and the center of buoyancy location ($X_2$) are separated from each other, the balancer can also be used for the training for strengthening arms and legs or the training for strengthening muscles used for maintaining the horizontal posture in the water. The separation condition is selected in such a manner that the swimmer information is obtained each time the kind and attaching position of the balancer is changed, and that the condition that the center of buoyancy location ($X_2$) and the center of mass location ($X_1$) are separated from each other is found out from the obtained swimmer information. In the case where the separation condition is selected in this way, the balancer 20 is used to make the center of buoyancy location and the center of mass location of the swimmer A separated from the same vertical line, so as to particularly disturb the horizontal posture of the swimmer A in the water.

Data of individual swimmers are measured, and the balancer 20, which is suitable for a swimmer and the purpose of training of the swimmer, may be custom-made on the basis of such data. Alternatively, data of a plurality of swimmers are collected and divided into groups according to features such as, for example, height, weight, body fat ratio, level of swimming skill, and the balancers 20 for swimming posture adjustment, which are corresponding to the respective groups of the swimmers, may also be designed on the basis of such grouped data.

(Examples)

Next, there will be described examples in which suitable attaching conditions corresponding to differences in the buoyant force among swimming suits are found out by using the swimmer information measurement device 1 configured as described above. When the swimmer A was made to put on each of the following swim suits, the buoyant force (B) and the center of buoyancy location (X2) were calculated. Any of the swim suits is in the form of half-pant having short leg enclosing sections.

Case 1; A swim suit made of a usual textile material was put on.

Case 2: A swim suit was put on, the swim suit having a thickness of 1.5 mm and formed of an elastic foam body (manufactured by Yamamoto Corporation, Japan, product name: Bio Rubber Swim) made of rubber and having a closed cell structure.

Case 3: A swim suit was put on, the swim suit having a thickness of 3.0 mm and formed of the elastic foam body (manufactured by Yamamoto Corporation, Japan, product name: Bio Rubber Swim) made of rubber and having the closed cell structure.

Case 4: A swim suit was put on, the swim suit having a thickness of 5.0 mm and formed of the elastic foam body (manufactured by Yamamoto Corporation, Japan, product name: Bio Rubber Swim) made of rubber and having the closed cell structure.

Note that the center of mass location ($X_1$) of the swimmer A was obtained by the center of mass location measurement device shown in Figure 18. It was assumed that the swimmer has the weight (W) = 68.55 kg, the distance ($X_0$) from the supporting point at the toe tip to the supporting point at the fingertip = 213 cm, and the measurement value (Fa) of the load cell provided under the hand = 32.86 kg. The center of mass location ($X_1$) was obtained by substituting these values into the expression (1).

$$Fa \cdot X_0 = W \cdot X_1 \ \ldots \ (1)$$

As the calculation result, the center of mass location ($X_1$) was obtained as $X_1$ = 102.1 cm.

Next, there will be described, for each of cases, a method for obtaining the buoyant force (B) and the center of buoyancy location ($X_2$) in the arithmetic processing section 9 by using the measurement device according to the present invention. The measurement was performed a total of 15 times in correspondence with the residual air amount (Vc). The data tables, each representing the loads F1 and F2 and the residual air amounts Vc at the time of this measurement, are respectively shown in Figures 3, 5, 7 and 9, and the regression expressions of each of the loads F1 and F2 and the residual air amounts Vc, which expressions are based on each of the data tables, are shown in each of Figures 4, 6, 8 and 10.

<Case 1>

(Regression expression of upper half body load (F1) and residual air amount (Vc))

When the upper half body load F1 ($Y_1$) is set as an objective variable, and when the residual air amount Vc(X) is set an explanatory variable, the following linear regression expression (7) is obtained according to the results of the upper half body load (F1), the lower half body load (F2), and the residual air amount (Vc) shown in Figure 3.

$$Y_1 = 0.0006X - 0.8613 \ (\text{correlation index } R^2 = 0.9967) \ \ldots \ (7)$$

(Regression expression of lower half body load (F2) and residual air amount (Vc))

When the lower half body load F2 ($Y_2$) set as an objective variable, and when the residual air amount Vc(X) is set as an explanatory variable, the following linear regression expression (8) is obtained.

$$Y_2 = 0.0003X - 1.1614 \ (R^2 = 0.993) \ \ldots \ (8)$$

(Regression expression of F1+F2 and residual air amount (Vc))

When F1 +F2 ($Y_{1+2}$) is set as an objective variable, and when the residual air amount Vc(X) is set as an explanatory variable, the following linear regression expression (9) is obtained.

$$Y_{1+2} = 0.0009X - 2.0227 \ (R^2 = 0.9959) \ \ldots \ (9)$$

The graphs of these linear regression expressions are shown in Figure 4.

(Calculation method of buoyant force (B))

Next, the buoyant force (B) is obtained. When the weight of the swimmer A is set as W, the following expression (4) is established.

$$B = W + F1 + F2 \ \ldots \ (4)$$

When regression expression (9) is substituted in expression (4), the following expression (10) is derived. The buoyant force (B) corresponding to the residual air amount (Vc) can be calculated from expression (10).

$$B = W + 0.0009X - 2.0227 \ \ldots \ (10)$$

(Calculation method of center of buoyancy location ($X_2$))

Further, when the position, at which the leg is fixed by the lower half body supporting section 4, is set as a fulcrum, the forces applied to the body are limited to the buoyant force, the weight, and the upper half body load F1, and hence, as for the center of buoyancy location ($X_2$), the following relational expression (5) is established.

$$X_2 \cdot B + X_1 \cdot (-W) + X_0 \cdot (-F1) = 0 \ \ldots \ (5)$$

When expression (7) and expression (10) are substituted into expression (5), the following relational expression (11) is established.

$$X_2 = (X_1 \cdot W + X_0 \cdot (0.0006X - 0.8613))/ \ (W + (0.0009X - 2.0227) \ \ldots \ (11)$$

The center of buoyancy location ($X_2$) corresponding to the residual air amount (Vc) can be calculated from expression (11).
When W = 68.55 kg, $X_0$ = 213 cm, $X_1$ = 102.1 cm, and the value of VC are substituted into expressions (10) and (11), the buoyant force (B) and the center of buoyancy location ($X_2$) both corresponding to the residual air amount (Vc) in samples 1 to 15 can be calculated as shown in Figure 3.

<Case 2>

(Regression expression of upper half body load (F1) and residual air amount (Vc))

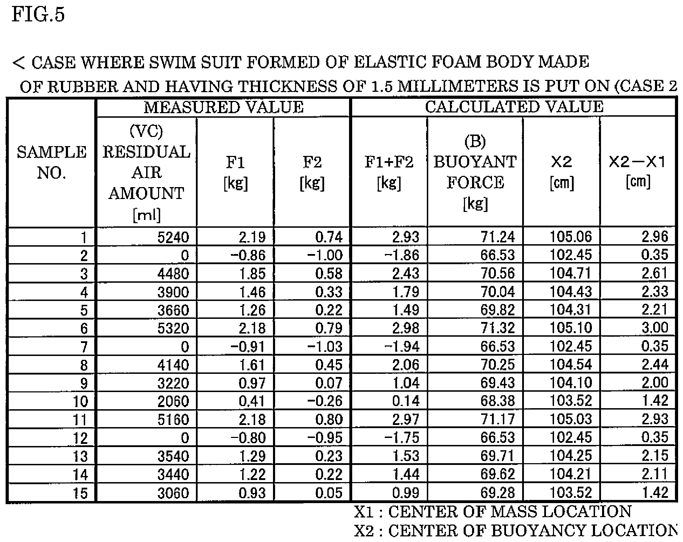

When the upper half body load F1 ($Y_1$) is set as an objective variable, and when the residual air amount Vc(X) is set as an explanatory variable, the following linear regression expression (17) is obtained according to the results shown in Figure 5.

$$Y_1 = 0.0006X - 0.8419 \ (R^2 = 0.9978) \ \ldots \ (17)$$

(Regression expression of lower half body load (F2) and residual air amount (Vc))

Further, when the lower half body load F2 ($Y_2$) is set as an objective variable, and when the residual air amount Vc(X) is set as an explanatory variable, the following linear regression expression (18) is obtained.

$$Y_2 = 0.0003X - 0.9876 \ (R^2 = 0.9971) \ \ldots \ (18)$$

(Regression expression of F1+F2 and residual air amount (Vc))

Further, when F1+F2 ($Y_{1+2}$) is set as an objective variable, and when the residual air amount Vc(X) is set as an explanatory variable, the following linear regression expression (19) is obtained.

$$Y_{1+2} = 0.0009X - 1.8295 \ (R^2 = 0.9977) \ \ldots \ (19)$$

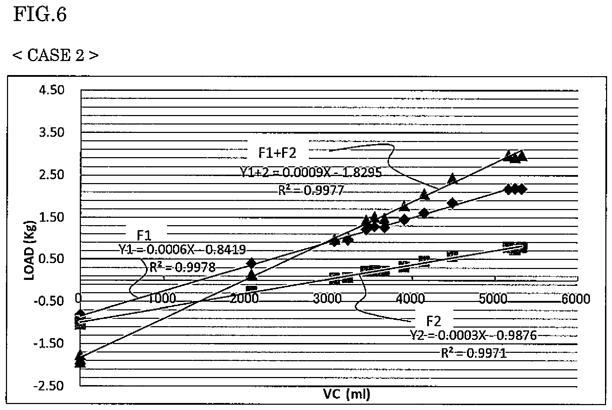

The graphs of these linear regression expressions are shown in Figure 6.

(Calculation method of buoyant force (B))

Then, when expression (19) is substituted into expression (4), expression (20) is derived, and thereby the buoyant force (B) corresponding to the residual air amount (Vc) can be calculated.

$$B = W + 0.0009X - 1.8295 \ \ldots \ (20)$$

(Calculation method of center of buoyancy location ($X_2$))

Further, when expression (17) is substituted into relational expression (5), the following relational expression (21) relating to the center of buoyancy location ($X_2$) is established.

$$X_2 = (X_1 \cdot W + X_0 \cdot (0.0006X - 0.8419)) / (W + (0.0009X - 1.8295)) \ \ldots \ (21)$$

By expression (21), the center of buoyancy location ($X_2$) corresponding to the residual air amount (Vc) can be calculated.
When W = 68.55 kg, $X_0$ = 213 cm, $X_1$ = 102.1 cm, and the value of VC are substituted into expressions (20) and (21), the buoyant force (B) and the center of buoyancy location ($X_2$) both corresponding to the residual air amount (Vc) in samples 1 to 15 can be calculated as shown in Figure 5.

<Case 3>

(Regression expression of upper half body load (F1) and residual air amount (Vc))

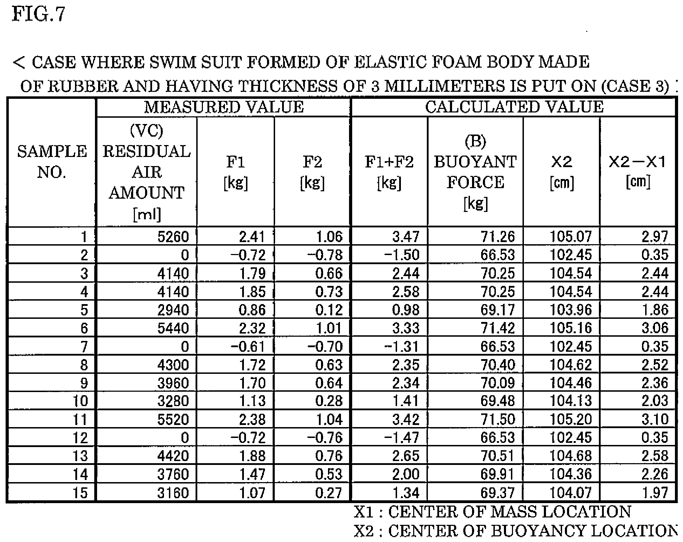

When the upper half body load F1 ($Y_1$) is set as an objective variable, and when the residual air amount Vc(X) is set as an explanatory variable, the following linear regression expression (22) is obtained according to the results shown in Figure 7.

$$Y_1 = 0.0006X - 0.6888 \ (R^2 = 0.9929) \ \ldots \ (22)$$

(Regression expression of lower half body load (F2) and residual air amount (Vc))

Further, when the lower half body load F2 ($Y_2$) is set as an objective variable, and when the residual air amount Vc(X) is set as an explanatory variable, the following linear regression expression (23) is obtained.

$$Y_2 = 0.0003X - 0.7545 \ (R^2 = 0.9913) \ \ldots \ (23)$$

(Regression expression of F1+F2 and residual air amount (Vc))

Further, when F1+F2 ($Y_{1+2}$) is set as an objective variable, and when the residual air amount Vc(X) is set as an explanatory variable, the following linear regression expression (24) is obtained.

$$Y_{1+2} = 0.0009X - 1.4433 \ (R^2 = 0.9925) \ \ldots \ (24)$$

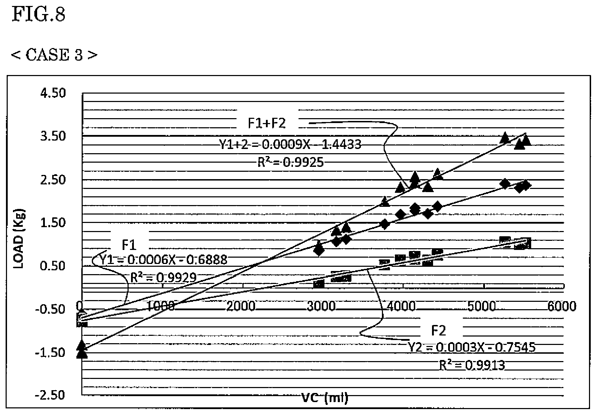

The graphs of these linear regression expressions are shown in Figure 8.

(Calculation method of buoyant force (B))

Then, when expression (24) is substituted into expression (4), the following expression (25) is derived, and thereby the buoyant force (B) corresponding to the residual air amount (Vc) can be calculated.

$$B = W + 0.0009X - 0.9925 \ \ldots \ (25)$$

(Calculation method of center of buoyancy location ($X_2$))

Further, when expression (22) is substituted into relational expression (5), the following relational expression (26) relating to the center of buoyancy location ($X_2$) is established.

$$X_2 = (X_1 \cdot W + X0 \cdot (0.0006X - 0.6888)) / (W + (0.0009X - 1.4433)) \ \ldots \ (26)$$

By expression (26), the center of buoyancy location ($X_2$) corresponding to the residual air amount (Vc) can be calculated.
When W = 68.55 kg, $X_0$ = 213 cm, $X_1$ = 102.1 cm, and the value of VC are substituted into expressions (25) and (26), the buoyant force (B) and the center of buoyancy location ($X_2$) both corresponding to the residual air amount (Vc) in samples 1 to 15 can be calculated as shown in Figure 7.

<Case 4>

(Regression expression of upper half body load (F1) and residual air amount (Vc))

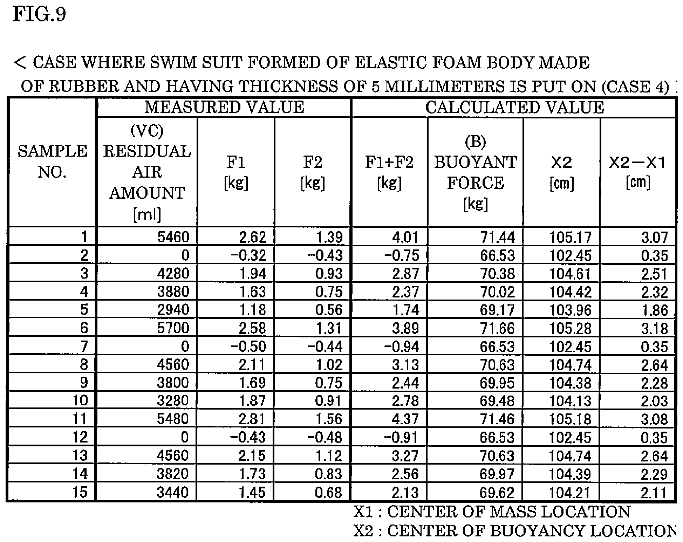

When the upper half body load F1 ($Y_1$) is set as an objective variable, and when the residual air amount Vc(X) is set as an explanatory variable, the following linear regression expression (27) is obtained according to the results shown in Figure 9.

$$Y_1 = 0.0006X - 0.3921 \ (R^2 = 0.9818) \ \ldots \ (27)$$

(Regression expression of lower half body load (F2) and residual air amount (Vc))

Further, when the lower half body load F2 ($Y_2$) is set as an objective variable, and when the residual air amount Vc(X) is set as an explanatory variable, the following linear regression expression (28) is obtained.

$$Y_2 = 0.0003X - 0.4354 \ (R^2 = 0.9749) \ \ldots \ (28)$$

(Regression expression of F1+F2 and residual air amount (Vc))

Further, when F1+F2 ($Y_{1+2}$) is set as an objective variable, and when the residual air amount Vc(X) is set as an explanatory variable, the following linear regression expression (29) is obtained.

$$Y_{1+2} = 0.0009X - 0.8275 \ (R^2 = 0.9801) \ \ldots \ (29)$$

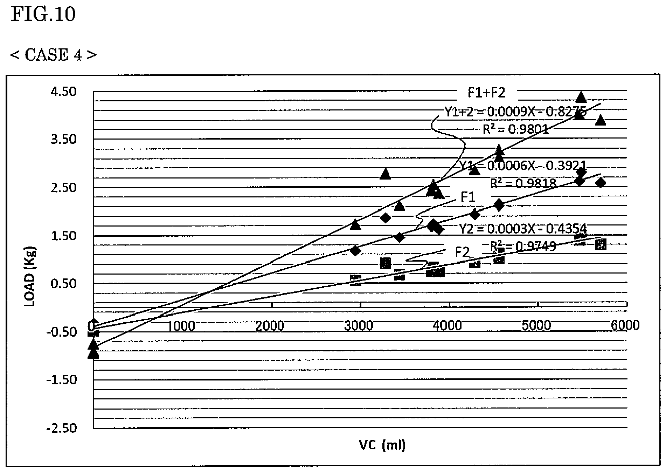

The graphs of these linear regression expressions are shown in Figure 10.

(Calculation method of buoyant force (B))

Then, when expression (29) is substituted into expression (4), the following expression (30) is derived, and thereby the buoyant force (B) corresponding to the residual air amount (Vc) can be calculated.

$$B = W + 0.0009X - 0.9925 \ \ldots \ (30)$$

(Calculation method of center of buoyancy location ($X_2$))

Further, when expression (27) is substituted into relational expression (5), the following relational expression (31) relating to the center of buoyancy location ($X_2$) is established.

$$X_2 = (X_1 \cdot W + X_0 \cdot (0.0006X - 0.3921)) / (W + (0.0009X - 0.8275)) \ \ldots \ (31)$$

By expression (31), the center of buoyancy location ($X_2$) corresponding to the residual air amount (Vc) can be calculated.

When W = 68.55 kg, $X_0$ = 213 cm, $X_1$ = 102.1 cm, and the value of VC are substituted into expressions (30) and (31), the buoyant force (B) and the center of buoyancy location ($X_2$) both corresponding to the residual air amount (Vc) in samples 1 to 15 can be calculated as shown in Figure 9.

(Calculation of difference ($X_2$-$X_1$) between center of buoyancy location and center of mass location)

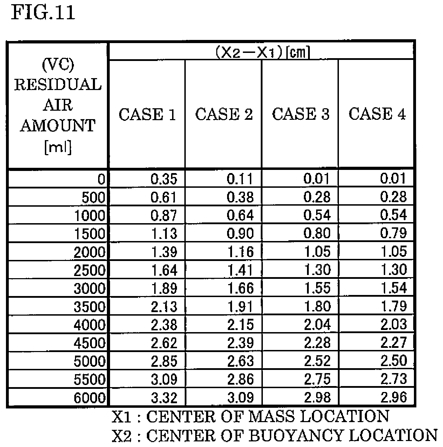

Further, the difference ($X_2$-$X_1$) between the center of buoyancy location and the center of mass location corresponding to the residual air amount (Vc) is calculated. The differences ($X_2$-$X_1$) corresponding to the residual air amounts 0, 500, 1000 ... are calculated, and the values of the differences are shown in Figure 11.

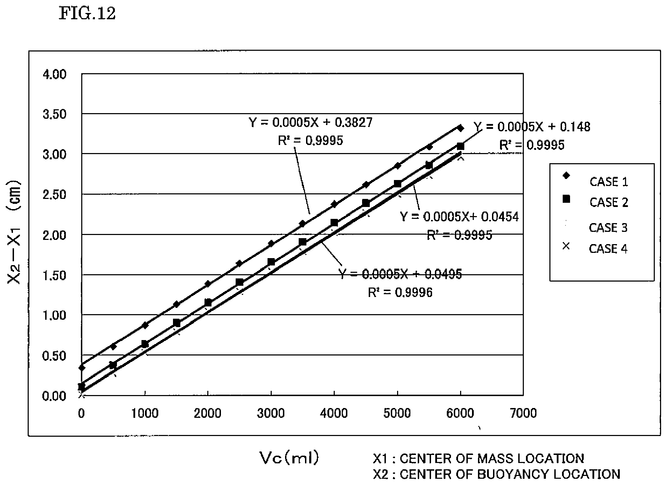

Further, it is seen that the difference ($X_2$-$X_1$) and the residual air amount (Vc) are proportional to each other. Therefore, the differences (Y) between the center of buoyancy location ($X_2$) and the center of mass location ($X_1$) are respectively expressed by the following linear regression expressions when the residual air amount (X) is set as a variable. The graphs of these linear regression expressions are shown in Figure 12.

Case 1:

$$Y = 0.0005X + 0.3827 \ (R^2 = 0.9995) \ \ldots \ (32)$$

Case 2:

$$Y = 0.0005X + 0.148 \ (R^2 = 0.9995) \ \ldots \ (33)$$

Case 3:

$$Y = 0.0005X + 0.0454 \ (R^2 = 0.9995) \ \ldots \ (34)$$

Case 4:

$$Y = 0.0005X + 0.0495 \ (R^2 = 0.9996) \ ... \ (35)$$

A study of Figure 11 and Figure 12 indicates that, in case 2, the difference between the center of buoyancy location (B) and the center of mass location ($X_1$) could be greatly reduced as compared with case 1. A large difference was not found between case 3 and case 4. Further, there is not a large difference between case 2 and case 3, and hence any one of the attaching condition in case 2 and the attaching condition in case 3 may be taken. However, when the condition, in which the center of mass location ($X_1$) and the center of buoyancy location ($X_2$) are made closer to a same vertical line, is to be taken, the attaching condition in case 3 may be taken. Further, the swimmer A in the present examples has a long experience of swimming and is a high level swimmer. Therefore, for the swimmer A, the attaching condition in case 2, in which the center of mass location ($X_1$) and the center of buoyancy location ($X_2$) is slightly separated from each other, can also be selected so as to make the swimmer A perform the training for maintaining the horizontal posture in the water.

In this way, with the swimmer posture adjustment method using the swimmer information measurement device 1, the posture of the swimmer is accurately grasped on the basis of the swimmer information in which the buoyant force (B), the center of buoyancy location ($X_2$), and the like, are included, and in which the residual air amount (Vc) is taken into account. Thereby, a suitable attaching condition of the balancer 20 can be selected, so as to enable the posture of the swimmer to be adjusted. Further, by use of these data obtained in this way, it is possible to enable the swimmer to swim faster and more efficiently, and also it is possible to develop a material enabling further improvement in swimming technique, and to develop the balancer 20, such as a swim suit using the material.

Further, when a physically handicapped swimmer performs training using the balancer 20, the swimmer can swim more easily and smoothly, to thereby sensuously learn the swimming posture. Therefore, the swimmer can swim easily and fast even after putting off the balancer.

Industrial Applicability

According to the present invention, a balancer is attached to a swimmer on the basis of the swimmer information including the center of mass location ($X_1$), the center of buoyancy location ($X_2$), the buoyant force (B), and the like, and thereby the difference between the center of mass location and the center of buoyancy location can be adjusted. Therefore, the swimmer information can be not only obtained but also effectively used as training means for swimming, and hence training for beginners or masters class swimmers, and further training for athlete class swimmers can be performed by adjusting the kind and attaching position of the balancer.

Reference Signs List

1       Swimmer information measurement device
3       Upper half body supporting section
4       Lower half body supporting section
6       Upper half body load sensor
7       Lower half body load sensor
8       Residual air amount measurement means
9       Arithmetic processing section
11      Computer
18      Control section
20      Balancer

**Claims**

1.  A swimmer posture adjustment method, wherein: the center of mass location ($X_1$) of a swimmer, and the center of buoyancy location ($X_2$) and buoyant force (B) of the swimmer maintaining a streamlined gliding posture in a downward-facing floating state in the water are obtained as measured swimmer information by measurement of the swimmer; and a buoyant and detachable balancer (20) is attached to the body of the swimmer on the basis of the measured swimmer information, to adjust the difference between the center of mass location ($X_1$) and the center of buoyancy

location ($X_2$) of the swimmer.

2. The swimmer posture adjustment method according to claim 1, wherein: the center of mass location ($X_1$) of the swimmer, a residual air amount (Vc) in the lungs of the swimmer maintaining a streamlined gliding posture in the downward-facing floating state in the water, and the center of buoyancy location ($X_2$) and buoyant force (B) both corresponding to the residual air amount are obtained as measured swimmer information.

3. The swimmer posture adjustment method according to claim 1 or claim 2, wherein: on the basis of the weight (W) of the swimmer, the weight being measured by a load cell on the ground, and on the basis of a load (Fa) of the swimmer maintaining a streamlined gliding posture with the body of the swimmer horizontally stretched out, the load being measured by a load sensor by using, as a measurement point, one of two supporting points supporting the body of the swimmer and separated from each other by a predetermined distance ($X_0$), the center of mass location ($X_1$) is calculated, from relational expression (1), as a distance from the other supporting point to the center of mass of the swimmer; and

in the state where the upper half body and the lower half body of the swimmer maintaining a streamlined gliding posture in a downward-facing floating state in the water are respectively supported at two points between which the center of buoyancy and the center of mass of the swimmer are located, the buoyant force (B) is obtained from relational expression (4) on the basis of an upper half body load (F1) measured by an upper half body load sensor, (6) and a lower half body load (F2) measured by a lower half body load sensor, (7) and the distance ($X_0$) between the two load measurement points is measured, and the center of buoyancy location ($X_2$) is obtained from relational expression (5)

$$Fa \cdot X_0 = W \cdot X_1 \ \ldots \ (1)$$

$$B = W + F1 + F2 \ \ldots \ (4)$$

$$X_2 \cdot B + X_1 \cdot (-W) + X_0 \cdot (-F1) = 0 \ \ldots \ (5).$$

4. The swimmer posture adjustment method according to claim 2, wherein: on the basis of the weight (W) of the swimmer, the weight being measured by a load cell on the ground, and on the basis of a load (Fa) of the swimmer maintaining a streamlined gliding posture with the body of the swimmer horizontally stretched out, the load being measured by a load sensor by using, as a measurement point, one of two supporting points supporting the body of the swimmer and separated from each other by a predetermined distance ($X_0$), the center of mass location ($X_1$) is calculated, from relational expression (1), as a distance from the other supporting point to the center of mass of the swimmer;

in the state where the upper half body and the lower half body of the swimmer maintaining a streamlined gliding posture in a downward-facing floating state in the water are respectively supported at two points between which the center of buoyancy and the center of mass of the swimmer are located, regression expressions are created in such a manner that a load (F1) measured by an upper half body load sensor (6) provided at an upper half body supporting section (3) supporting the upper half body of the swimmer, or a load (F2) measured by a lower half body load sensor (7) provided at a lower half body supporting section (4) supporting the lower half body of the swimmer, is set as an explanatory variable, and a residual air amount (Vc) of the swimmer is set as an objective variable, the amount being measured by residual air amount measurement means, and the regression expressions are substituted in relational expression (4'), to calculate the buoyant force (B) corresponding to the residual air amount (Vc); and

the regression expressions of the buoyant force (B) and the upper half body load (F1) are substituted in relational expression (5) to calculate the center of buoyancy location ($X_2$) corresponding to the residual air amount (Vc)

$$Fa \cdot X_0 = W \cdot X_1 \ \ldots \ (1)$$

$$B = W + F1 + F2 \ \ldots \ (4')$$

$$X_2 \cdot B + X_1 \cdot (-W) + X_0 \cdot (-F1) = 0 \ \ldots \ (5).$$

5. The swimmer posture adjustment method according to claim 3 or claim 4, wherein the difference between the calculated center of buoyancy location $(X_2)$ and the calculated center of mass location $(X_1)$ is calculated.

6. The swimmer posture adjustment method according to claim 1 or claim 2, wherein the balancer is made of an elastic foam body having a closed cell structure, and is a supporter which can be attached to part of the body of the swimmer.

7. The swimmer posture adjustment method according to claim 1 or claim 2, wherein the balancer is made of an elastic foam body having a closed cell structure, and is formed as a part of a swim suit.

8. A swimmer information measurement device for use in the swimmer posture adjustment method according to claim 1, claim 2 or claim 4, comprising:

an upper half body supporting section (3) and a lower half body supporting section (4) which include therebetween the center of buoyancy and the center of mass of the swimmer maintaining the streamlined gliding posture in the downward-facing floating state in the water and respectively support, at two points, the upper half body and the lower half body of the swimmer; an upper half body load sensor (6) which measures a load (F1) acting at the upper half body supporting section; (3)
a lower half body load sensor (7) which measures a load (F2) acting at the lower half body supporting section (4); residual air amount measurement means (8) which measures a residual air amount (Vc) of the swimmer at the time of measurement of the loads; a storage section which stores the upper half body load (F1), the lower half body load (F2), the distance $(X_0)$ between both the load measurement points, the residual air amount (Vc), and the previously measured weight (W) and calculated center of mass location $(X_1)$ of the swimmer; arithmetic processing means (9) which calculates the swimmer information including the buoyant force (B) and the center of buoyancy location $(X_2)$ on the basis of the upper half body load (F1), the lower half body load (F2), the distance $(X_0)$ between both the load measurement points, the residual air amount (Vc), which are stored in the storage section; and output means which outputs the swimmer information calculated by the arithmetic operation means, wherein: the arithmetic processing means (9) can perform processing in which a regression expression is created by setting, as an explanatory variable, each of a set of a plurality of the upper half body loads (F1) and a set of a plurality of the lower half body loads (F2) that are stored in the storage section, and by setting, as an objective variable, the residual air amounts (Vc) stored in the storage section;
the following relational expression (4') stored beforehand in the storage section is called, and then the buoyant force (B) is calculated by substituting these created regression expressions into relational expression (4); and the following relational expression (5) stored beforehand in the storage section is called, and the center of buoyancy location $(X_2)$ is calculated by substituting the regression expressions of the buoyant force (B) and the upper half body load (F1) into the relational expression (5)

$$B = W + F1 + F2 \ \ldots \ (4')$$

$$X_2 \cdot B + X_1 \cdot (-W) + X_0 \cdot (-F1) = 0 \ \ldots \ (5).$$

**Patentansprüche**

1. Verfahren zum Einstellen der Körperhaltung eines Schwimmers, wobei:

der Ort des Massenmittelpunkts $(X_1)$ eines Schwimmers und der Ort des Auftriebsmittelpunkts $(X_2)$ und die Auftriebskraft (B) des Schwimmers, der eine stromlinienförmige Gleithaltung in einem nach unten gerichteten Schwimmzustand im Wasser beibehält, als gemessene Schwimmerinformation durch Messung an dem Schwimmer erhalten werden; und
ein schwimmfähiges und abnehmbares Ausgleichselement (20) auf der Grundlage der gemessenen Schwimmerinformation am Körper des Schwimmers angebracht wird, um die Differenz zwischen dem Ort des Massenmittelpunkts $(X_1)$ und dem Ort des Auftriebsmittelpunkts $(X_2)$ des Schwimmers auszugleichen.

2. Verfahren zum Einstellen der Körperhaltung eines Schwimmers nach Anspruch 1, wobei:
der Ort des Massenmittelpunkts ($X_1$) des Schwimmers, eine Restluftmenge (Vc) in der Lunge des Schwimmers, der eine stromlinienförmige Gleithaltung in dem nach unten gerichteten Schwimmzustand im Wasser beibehält, und der Ort des Auftriebsmittelpunkts ($X_2$) und die Auftriebskraft (B), die beide der Restluftmenge entsprechen, als gemessene Schwimmerinformation erhalten werden.

3. Verfahren zum Einstellen der Körperhaltung eines Schwimmers nach Anspruch 1 oder Anspruch 2, wobei:

auf der Grundlage des Gewichts (W) des Schwimmers, wobei das Gewicht durch eine Lastzelle am Boden gemessen wird, und auf der Grundlage einer Last (Fa) des Schwimmers, der eine stromlinienförmige Gleithaltung mit horizontal ausgestrecktem Körper des Schwimmers beibehält, wobei die Last durch einen Lastsensor gemessen wird, indem als ein Messpunkt einer von zwei Abstützpunkten verwendet wird, die den Körper des Schwimmers abstützen und durch einen vorbestimmten Abstand ($X_0$) voneinander getrennt sind, der Ort des Massenmittelpunkts ($X_1$) aus einem Beziehungsausdruck (1) als Abstand von dem anderen Abstützpunkt zu dem Massenmittelpunkt des Schwimmers berechnet wird; und
in dem Zustand, in dem die obere Körperhälfte und die untere Körperhälfte des Schwimmers, der eine stromlinienförmige Gleithaltung in einem nach unten gerichteten Schwimmzustand im Wasser beibehält, jeweils an zwei Punkten abgestützt werden, zwischen denen sich der Auftriebsmittelpunkt und der Massenmittelpunkt des Schwimmers befinden, die Auftriebskraft (B) aus einem Beziehungsausdruck (4) auf der Grundlage einer Last (F1) der oberen Körperhälfte, die von einem Lastsensor (6) für die obere Körperhälfte gemessen wird, und einer Last der unteren Körperhälfte (F2), die von einem Lastsensor (7) für die untere Körperhälfte gemessen wird, erhalten wird, und der Abstand ($X_0$) zwischen den beiden Lastmesspunkten gemessen wird, und der Ort des Auftriebsmittelpunkts ($X_2$) aus einem Beziehungsausdruck (5) erhalten wird:

$$Fa \cdot X_0 = W \cdot X_1 \ ... \ (1)$$

$$B = W + F1 + F2 \ ... \ (4)$$

$$X_2 \cdot B + X_1 \cdot (-W) + X_0 \cdot (-F1) = 0 \ ... \ (5).$$

4. Verfahren zum Einstellen der Körperhaltung eines Schwimmers nach Anspruch 2, wobei:

auf der Grundlage des Gewichts (W) des Schwimmers, wobei das Gewicht durch eine Lastzelle am Boden gemessen wird, und auf der Grundlage einer Last (Fa) des Schwimmers, der eine stromlinienförmige Gleithaltung mit horizontal ausgestrecktem Körper des Schwimmers beibehält, wobei die Last durch einen Lastsensor gemessen wird, indem als Messpunkt einer von zwei Abstützpunkten verwendet wird, die den Körper des Schwimmers abstützen und durch einen vorbestimmten Abstand ($X_0$) voneinander getrennt sind, der Ort des Massenmittelpunkts ($X_1$) aus dem Beziehungsausdruck (1) als Abstand von dem anderen Abstützpunkt zu dem Massenmittelpunkt des Schwimmers berechnet wird;
in dem Zustand, in dem die obere Körperhälfte und die untere Körperhälfte des Schwimmers, der eine stromlinienförmige Gleithaltung in einem nach unten gerichteten Schwimmzustand im Wasser beibehält, jeweils an zwei Punkten abgestützt werden, zwischen denen sich der Auftriebsmittelpunkt und der Massenmittelpunkt des Schwimmers befinden, Regressionsausdrücke in einer derartigen Weise erzeugt werden, dass eine Last (F1), die von einem Lastsensor (6) für die obere Körperhälfte gemessen wird, der an einem Stützabschnitt (3) für die obere Körperhälfte vorgesehen ist, der die obere Körperhälfte des Schwimmers abstützt, oder eine Last (F2), die von einem Lastsensor (7) für die untere Körperhälfte gemessen wird, der an einem Stützabschnitt (4) für die untere Körperhälfte vorgesehen ist, der die untere Körperhälfte des Schwimmers abstützt, als erklärende Variable vorgegeben wird, und eine Restluftmenge (Vc) des Schwimmers als Zielvariable vorgegeben wird, wobei die Menge durch eine Restluftmengen-Messeinrichtung gemessen wird, und die Regressionsausdrücke in einen Beziehungsausdruck (4') eingesetzt werden, um die der Restluftmenge (Vc) entsprechende Auftriebskraft (B) zu berechnen;
und die Regressionsausdrücke der Auftriebskraft (B) und der Last (F1) der oberen Körperhälfte in einen Beziehungsausdruck (5) eingesetzt werden, um den Ort des Auftriebsmittelpunkts ($X_2$) zu berechnen, der der Restluftmenge (Vc) entspricht:

$$Fa \cdot X_0 = W \cdot X_1 \ldots (1)$$

$$B = W + F1 + F2 \ldots (4')$$

$$X_2 \cdot B + X_1 \cdot (- W) + X_0 \cdot (- F1) = 0 \ldots (5).$$

5. Verfahren zum Einstellen der Körperhaltung eines Schwimmers nach Anspruch 3 oder Anspruch 4, wobei die Differenz zwischen dem berechneten Ort des Auftriebsmittelpunkts ($X_2$) und dem berechneten Ort des Massenmittelpunkts ($X_1$) berechnet wird.

6. Verfahren zum Einstellen der Körperhaltung eines Schwimmers nach Anspruch 1 oder Anspruch 2, wobei das Ausgleichselement aus einem elastischen Schaumstoffkörper mit einer geschlossenen Zellstruktur gebildet ist und ein Träger ist, der an einem Teil des Körpers des Schwimmers angebracht werden kann.

7. Verfahren zum Einstellen der Körperhaltung eines Schwimmers nach Anspruch 1 oder Anspruch 2, wobei das Ausgleichselement aus einem elastischen Schaumstoffkörper mit einer geschlossenen Zellstruktur gebildet ist und als Teil eines Schwimmanzugs ausgebildet ist.

8. Schwimmerinformation-Messvorrichtung zur Verwendung bei dem Verfahren zum Einstellen der Körperhaltung eines Schwimmers nach Anspruch 1, Anspruch 2 oder Anspruch 4, aufweisend:

einen Stützabschnitt (3) für die obere Körperhälfte und einen Stützabschnitt (4) für die untere Körperhälfte, die zwischen sich den Auftriebsmittelpunkt und den Massenmittelpunkt des Schwimmers aufweisen, der die stromlinienförmige Gleithaltung in dem nach unten gerichteten Schwimmzustand im Wasser beibehält, und die jeweils an zwei Punkten die obere Körperhälfte und die untere Körperhälfte des Schwimmers abstützen;
einen Lastsensor (6) für die obere Körperhälfte, der eine Last (F1) misst, die an dem Stützabschnitt (3) für die obere Körperhälfte wirkt;
einen Lastsensor (7) für die untere Körperhälfte, der eine Last (F2) misst, die an dem Stützabschnitt (4) für die untere Körperhälfte wirkt;
eine Restluftmengen-Messeinrichtung (8), die eine Restluftmenge (Vc) des Schwimmers zum Zeitpunkt der Messung der Lasten misst;
einen Speicherbereich, der die Last (F1) der oberen Körperhälfte, die Last (F2) der unteren Körperhälfte, den Abstand ($X_0$) zwischen den beiden Lastmesspunkten, die Restluftmenge (Vc) sowie das zuvor gemessene Gewicht (W) und den berechneten Ort des Massenmittelpunkts ($X_1$) des Schwimmers speichert;
eine Rechenverarbeitungseinrichtung (9), die die Schwimmerinformation einschließlich der Auftriebskraft (B) und des Orts des Auftriebsmittelpunkts ($X_2$) auf der Grundlage der Last (F1) der oberen Körperhälfte, der Last (F2) der unteren Körperhälfte, des Abstands ($X_0$) zwischen den beiden Lastmesspunkten und der Restluftmenge (Vc) berechnet, die in dem Speicherbereich gespeichert sind; und
eine Ausgabeeinrichtung, die die von der Rechenverarbeitungseinrichtung berechnete Schwimmerinformation ausgibt, wobei: die Rechenverarbeitungseinrichtung (9) eine Verarbeitung ausführen kann, bei der ein Regressionsausdruck erzeugt wird, indem als eine erklärende Variable ein jeweiliger Satz einer Mehrzahl der oberen Körperhälften-Lasten (F1) und ein jeweiliger Satz einer Mehrzahl der unteren Körperhälften-Lasten (F2), die in dem Speicherbereich gespeichert sind, vorgegeben werden, und indem als eine Zielvariable die Restluftmengen (Vc) vorgegeben werden, die in dem Speicherbereich gespeichert sind;
wobei der folgende Beziehungsausdruck (4'), der vorab in dem Speicherbereich gespeichert wurde, aufgerufen wird und dann die Auftriebskraft (B) berechnet wird, indem diese erzeugten Regressionsausdrücke in den Beziehungsausdruck (4) eingesetzt werden; und wobei der folgende Beziehungsausdruck (5), der vorab in dem Speicherbereich gespeichert wurde, aufgerufen wird und der Ort des Auftriebsmittelpunkts ($X_2$) berechnet wird, indem die Regressionsausdrücke für die Auftriebskraft (B) und die Last (F1) der oberen Körperhälfte in den Beziehungsausdruck (5) eingesetzt werden:

$$B = W + F1 + F2 \ldots (4')$$

$$X_2 \cdot B + X_1 \cdot (-W) + X_0 \cdot (-F1) = 0 \ldots (5).$$

**Revendications**

1. Procédé d'ajustement de position de nageur, dans lequel : la localisation du centre de gravité ($X_1$) d'un nageur, et la localisation du centre de flottabilité ($X_2$) et la force de flottabilité (B) du nageur qui maintient une position hydrodynamique de glisse dans un état de flottaison orienté vers le bas dans l'eau sont obtenues comme informations de nageur mesurées en mesurant le nageur ; et un dispositif d'équilibrage (20) flottant et amovible est fixé au corps du nageur sur la base des informations de nageur mesurées, pour ajuster la différence entre la localisation du centre de gravité ($X_1$) et la localisation du centre de flottabilité ($X_2$) du nageur.

2. Procédé d'ajustement de position de nageur selon la revendication 1, dans lequel la localisation du centre de gravité ($X_1$) du nageur, une quantité d'air résiduel (Vc) dans les poumons du nageur qui maintient une position hydrodynamique de glisse dans un état de flottaison orienté vers le bas dans l'eau, et la localisation du centre de flottabilité ($X_2$) et la force de flottabilité (B) correspondant toutes deux à la quantité d'air résiduel sont obtenues comme informations de nageur mesurées.

3. Procédé d'ajustement de position de nageur selon la revendication 1 ou la revendication 2, dans lequel : sur la base du poids (W) du nageur, le poids étant mesuré par une cellule de charge sur le sol, et sur la base d'une charge (Fa) du nageur qui maintient une position hydrodynamique de glisse avec le corps du nageur tendu horizontalement, la charge étant mesurée par un capteur de charge en utilisant, comme point de mesure, l'un des deux points de support supportant le corps du nageur et séparés l'un de l'autre par une distance prédéterminée ($X_0$), la localisation du centre de gravité ($X_1$) est calculée, à partir d'une expression relationnelle (1), comme une distance entre l'autre point de support et le centre de gravité du nageur ; et dans un état dans lequel la moitié supérieure du corps et la moitié inférieure du corps du nageur qui maintient une position hydrodynamique de glisse dans un état de flottaison orienté vers le bas dans l'eau sont supportées respectivement au niveau de deux points entre lesquels le centre de flottabilité et le centre de gravité du nageur sont localisés, la force de flottabilité (B) est obtenue à partir d'une expression relationnelle (4) sur base d'une charge de moitié supérieure de corps (F1) mesurée par un capteur de charge de moitié supérieure de corps (6) et une charge de moitié inférieure de corps (F2) mesurée par un capteur de charge de moitié inférieure de corps (7) et la distance ($X_0$) entre les deux points de mesure de charge est mesurée, et la localisation du centre de flottabilité ($X_2$) est obtenue à partir de l'expression relationnelle (5)

$$Fa \cdot X_0 = W \cdot X_1 \ldots (1)$$

$$B = W + F1 + F2 \ldots (4)$$

$$X_2 \cdot B + X_1 \cdot (-W) + X_0 \cdot (-F1) = 0 \ldots (5).$$

4. Procédé d'ajustement de position de nageur selon la revendication 2, dans lequel : sur la base du poids (W) du nageur, le poids étant mesuré par une cellule de charge sur le sol, et sur la base d'une charge (Fa) du nageur qui maintient une position hydrodynamique de glisse avec le corps du nageur tendu horizontalement, la charge étant mesurée par un capteur de charge en utilisant, comme point de mesure, l'un des deux points de support supportant le corps du nageur et séparés l'un de l'autre par une distance prédéterminée ($X_0$), la localisation du centre de gravité ($X_1$) est calculée, à partir de l'expression relationnelle (1), comme une distance entre l'autre point de support et le centre de gravité du nageur ; dans l'état dans lequel la moitié supérieure du corps et la moitié inférieure du corps du nageur qui maintient une position hydrodynamique de glisse dans un état de flottaison orienté vers le bas dans l'eau sont supportées respectivement au niveau de deux points entre lesquels le centre de flottabilité et le centre de gravité du nageur sont localisés, des expressions de régression sont créées de telle manière qu'une charge (F1) mesurée par un capteur de charge de moitié supérieure de corps (6) fourni au niveau d'une section de support de moitié supérieure de corps (3) qui supporte la moitié supérieure du corps du nageur, ou une charge (F2) mesurée par un capteur de charge de moitié inférieure de corps (7) fourni au niveau d'une section de support de moitié inférieure de corps (4) qui

27

supporte la moitié inférieure du corps du nageur, est définie comme variable explicative, et une quantité d'air résiduel $(V_c)$ du nageur est définie comme variable objective, la quantité étant mesurée par des moyens de mesure de quantité d'air résiduel, et les expressions de régression sont substituées dans l'expression relationnelle (4'), pour calculer la force de flottabilité (B) correspondant à la quantité d'air résiduel $(V_c)$ ; et les expressions de régression de la force de flottabilité (B) et la charge de moitié de corps supérieure (F1) sont substituées dans l'expression relationnelle (5) pour calculer la localisation du centre de flottabilité $(X_2)$ correspondant à la quantité d'air résiduel $(V_c)$

$$Fa \cdot X_0 = W \cdot X_1 \ \ldots \ (1)$$

$$B = W + F1 + F2 \ \ldots \ (4')$$

$$X_2 \cdot B + X_1 \cdot (-W) + X_0 \cdot (-F1) = 0 \ \ldots \ (5).$$

5. Procédé d'ajustement de position de nageur selon la revendication 3 ou la revendication 4, dans lequel la différence entre la localisation du centre de flottabilité $(X_2)$ calculée et la localisation du centre de gravité calculée $(X_1)$ est calculée.

6. Procédé d'ajustement de position de nageur selon la revendication 1 ou la revendication 2, dans lequel le dispositif d'équilibrage est constitué d'un corps en mousse élastique disposant d'une structure à cellules fermées, et est un dispositif de support qui peut être fixé à une partie du corps du nageur.

7. Procédé d'ajustement de position de nageur selon la revendication 1 ou la revendication 2, dans lequel le dispositif d'équilibrage est constitué d'un corps en mousse élastique disposant d'une structure à cellules fermées, et constitue une partie d'un maillot de bain.

8. Dispositif de mesure d'informations de nageur à utiliser dans le procédé d'ajustement de position de nageur selon la revendication 1, la revendication 2 ou la revendication 4, comprenant :

   une section de support de moitié supérieure de corps (3) et une section de support de moitié inférieure de corps (4) qui comportent entre elles le centre de flottabilité et le centre de gravité du nageur qui maintient une position hydrodynamique de glisse dans un état de flottaison orienté vers le bas dans l'eau et supportent respectivement, au niveau de deux points, la moitié supérieure du corps et la moitié inférieure du corps du nageur ; un capteur de charge de moitié supérieure de corps (6) qui mesure une charge (F1) agissant au niveau de la section de support de moitié supérieure de corps (3) ; un capteur de charge de moitié inférieure de corps (7) qui mesure une charge (F2) agissant au niveau de la section de support de moitié inférieure de corps (4) ; des moyens de mesure de quantité d'air résiduel (8) qui mesurent une quantité d'air résiduel $(V_c)$ du nageur au moment où les charges sont mesurées ; une section de stockage qui stocke la charge de moitié supérieure de corps (F1), la charge de moitié inférieure du corps (F2), la distance $(X_0)$ entre les deux points de mesure de charge, la quantité d'air résiduel $(V_c)$, et le poids mesuré précédemment (W) et la localisation du centre de gravité calculée $(X_1)$ du nageur ;
   des moyens de traitement arithmétique (9) qui calculent les informations de nageur comportant la force de flottabilité (B) et la localisation du centre de flottabilité $(X_2)$ sur la base de la charge de moitié supérieure de corps (F1), la charge de moitié inférieure de corps (F2), la distance $(X_0)$ entre les deux points de mesure de charge, la quantité d'air résiduel $(V_c)$, qui sont stockées dans la section de stockage ; et des moyens de sortie qui délivrent en sortie les informations de nageur calculées par les moyens d'opération arithmétique dans lequel : les moyens de traitement arithmétique (9) peuvent effectuer un traitement dans lequel une expression de régression est créée en définissant, comme variable explicative, chacune d'un ensemble d'une pluralité de charges de moitié supérieure de corps (F1) et d'un ensemble d'une pluralité de charges de moitié inférieure de corps (F2) qui sont stockées dans la section de stockage, et en définissant, comme variable objective, les quantités d'air résiduel $(V_c)$ stockées dans la section de stockage ;
   l'expression relationnelle suivante (4') stockée au préalable dans la section de stockage est appelée, et ensuite, la force de flottabilité (B) est calculée en substituant ces expressions de régression créées dans l'expression relationnelle (4) ; et
   l'expression relationnelle suivante (5) stockée au préalable dans la section de stockage est appelée, et la localisation du centre de flottabilité $(X_2)$ est calculée en substituant les expressions de régression de la force de flottabilité (B) et de la charge de moitié supérieure de corps (F1) dans l'expression relationnelle (5)

$$B = W + F1 + F2 \ ... \ (4')$$

$$X_2 \cdot B + X_1(-W) + X_0 \cdot (-F1) = 0 \ ... \ (5).$$

FIG.1

FIG.2

COMPUTER 11

CONTROL SECTION 18

ARITHMETIC PROCESSING SECTION 9

SERIAL PORT 17

STORAGE SECTION 12

1

10a

MONITOR

10b

PRINTER

6 UPPER HALF BODY LOAD SENSOR

7 LOWER HALF BODY LOAD SENSOR

8 RESIDUAL AIR AMOUNT MEASUREMENT MEANS

## FIG.3

< CASE WHERE USUAL TEXTILE SWIM SUIT IS PUT ON (CASE 1) >

| SAMPLE NO. | MEASURED VALUE | | | CALCULATED VALUE | | | |
|---|---|---|---|---|---|---|---|
| | (VC) RESIDUAL AIR AMOUNT [ml] | F1 [kg] | F2 [kg] | F1+F2 [kg] | (B) BUOYANT FORCE [kg] | X2 [cm] | X2−X1 [cm] |
| 1 | 5560 | 2.16 | 0.60 | 2.76 | 71.53 | 105.21 | 3.11 |
| 2 | 0 | −0.82 | −1.12 | −1.95 | 66.53 | 102.45 | 0.35 |
| 3 | 4740 | 1.83 | 0.45 | 2.28 | 70.79 | 104.83 | 2.73 |
| 4 | 4940 | 1.85 | 0.45 | 2.30 | 70.97 | 104.92 | 2.82 |
| 5 | 3420 | 0.94 | −0.10 | 0.83 | 69.61 | 104.20 | 2.10 |
| 6 | 5300 | 2.08 | 0.56 | 2.64 | 71.30 | 105.09 | 2.99 |
| 7 | 0 | −0.91 | −1.21 | −2.12 | 66.53 | 102.45 | 0.35 |
| 8 | 4180 | 1.45 | 0.21 | 1.66 | 70.29 | 104.56 | 2.46 |
| 9 | 2980 | 0.75 | −0.19 | 0.56 | 69.21 | 103.98 | 1.88 |
| 10 | 3200 | 0.95 | −0.08 | 0.87 | 69.41 | 104.09 | 1.99 |
| 11 | 5360 | 2.19 | 0.72 | 2.90 | 71.35 | 105.12 | 3.02 |
| 12 | 0 | −0.88 | −1.16 | −2.05 | 66.53 | 102.45 | 0.35 |
| 13 | 4260 | 1.46 | 0.21 | 1.66 | 70.36 | 104.60 | 2.50 |
| 14 | 2580 | 0.71 | −0.23 | 0.48 | 68.85 | 103.78 | 1.68 |
| 15 | 3860 | 1.31 | 0.06 | 1.37 | 70.00 | 104.41 | 2.31 |

X1 : CENTER OF MASS LOCATION
X2 : CENTER OF BUOYANCY LOCATION

FIG.4

< CASE 1 >

FIG.5

< CASE WHERE SWIM SUIT FORMED OF ELASTIC FOAM BODY MADE
OF RUBBER AND HAVING THICKNESS OF 1.5 MILLIMETERS IS PUT ON (CASE 2

| SAMPLE NO. | MEASURED VALUE | | | CALCULATED VALUE | | | |
|---|---|---|---|---|---|---|---|
| | (VC) RESIDUAL AIR AMOUNT [ml] | F1 [kg] | F2 [kg] | F1+F2 [kg] | (B) BUOYANT FORCE [kg] | X2 [cm] | X2−X1 [cm] |
| 1 | 5240 | 2.19 | 0.74 | 2.93 | 71.24 | 105.06 | 2.96 |
| 2 | 0 | −0.86 | −1.00 | −1.86 | 66.53 | 102.45 | 0.35 |
| 3 | 4480 | 1.85 | 0.58 | 2.43 | 70.56 | 104.71 | 2.61 |
| 4 | 3900 | 1.46 | 0.33 | 1.79 | 70.04 | 104.43 | 2.33 |
| 5 | 3660 | 1.26 | 0.22 | 1.49 | 69.82 | 104.31 | 2.21 |
| 6 | 5320 | 2.18 | 0.79 | 2.98 | 71.32 | 105.10 | 3.00 |
| 7 | 0 | −0.91 | −1.03 | −1.94 | 66.53 | 102.45 | 0.35 |
| 8 | 4140 | 1.61 | 0.45 | 2.06 | 70.25 | 104.54 | 2.44 |
| 9 | 3220 | 0.97 | 0.07 | 1.04 | 69.43 | 104.10 | 2.00 |
| 10 | 2060 | 0.41 | −0.26 | 0.14 | 68.38 | 103.52 | 1.42 |
| 11 | 5160 | 2.18 | 0.80 | 2.97 | 71.17 | 105.03 | 2.93 |
| 12 | 0 | −0.80 | −0.95 | −1.75 | 66.53 | 102.45 | 0.35 |
| 13 | 3540 | 1.29 | 0.23 | 1.53 | 69.71 | 104.25 | 2.15 |
| 14 | 3440 | 1.22 | 0.22 | 1.44 | 69.62 | 104.21 | 2.11 |
| 15 | 3060 | 0.93 | 0.05 | 0.99 | 69.28 | 103.52 | 1.42 |

X1 : CENTER OF MASS LOCATION
X2 : CENTER OF BUOYANCY LOCATION

## FIG.6

< CASE 2 >

## FIG.7

< CASE WHERE SWIM SUIT FORMED OF ELASTIC FOAM BODY MADE
OF RUBBER AND HAVING THICKNESS OF 3 MILLIMETERS IS PUT ON (CASE 3) :

| SAMPLE NO. | MEASURED VALUE | | | CALCULATED VALUE | | | |
|---|---|---|---|---|---|---|---|
| | (VC) RESIDUAL AIR AMOUNT [ml] | F1 [kg] | F2 [kg] | F1+F2 [kg] | (B) BUOYANT FORCE [kg] | X2 [cm] | X2−X1 [cm] |
| 1 | 5260 | 2.41 | 1.06 | 3.47 | 71.26 | 105.07 | 2.97 |
| 2 | 0 | −0.72 | −0.78 | −1.50 | 66.53 | 102.45 | 0.35 |
| 3 | 4140 | 1.79 | 0.66 | 2.44 | 70.25 | 104.54 | 2.44 |
| 4 | 4140 | 1.85 | 0.73 | 2.58 | 70.25 | 104.54 | 2.44 |
| 5 | 2940 | 0.86 | 0.12 | 0.98 | 69.17 | 103.96 | 1.86 |
| 6 | 5440 | 2.32 | 1.01 | 3.33 | 71.42 | 105.16 | 3.06 |
| 7 | 0 | −0.61 | −0.70 | −1.31 | 66.53 | 102.45 | 0.35 |
| 8 | 4300 | 1.72 | 0.63 | 2.35 | 70.40 | 104.62 | 2.52 |
| 9 | 3960 | 1.70 | 0.64 | 2.34 | 70.09 | 104.46 | 2.36 |
| 10 | 3280 | 1.13 | 0.28 | 1.41 | 69.48 | 104.13 | 2.03 |
| 11 | 5520 | 2.38 | 1.04 | 3.42 | 71.50 | 105.20 | 3.10 |
| 12 | 0 | −0.72 | −0.76 | −1.47 | 66.53 | 102.45 | 0.35 |
| 13 | 4420 | 1.88 | 0.76 | 2.65 | 70.51 | 104.68 | 2.58 |
| 14 | 3760 | 1.47 | 0.53 | 2.00 | 69.91 | 104.36 | 2.26 |
| 15 | 3160 | 1.07 | 0.27 | 1.34 | 69.37 | 104.07 | 1.97 |

X1 : CENTER OF MASS LOCATION
X2 : CENTER OF BUOYANCY LOCATION

FIG.8

< CASE 3 >

FIG.9

< CASE WHERE SWIM SUIT FORMED OF ELASTIC FOAM BODY MADE
OF RUBBER AND HAVING THICKNESS OF 5 MILLIMETERS IS PUT ON (CASE 4) :

| SAMPLE NO. | MEASURED VALUE | | | CALCULATED VALUE | | | |
|---|---|---|---|---|---|---|---|
| | (VC) RESIDUAL AIR AMOUNT [ml] | F1 [kg] | F2 [kg] | F1+F2 [kg] | (B) BUOYANT FORCE [kg] | X2 [cm] | X2−X1 [cm] |
| 1 | 5460 | 2.62 | 1.39 | 4.01 | 71.44 | 105.17 | 3.07 |
| 2 | 0 | −0.32 | −0.43 | −0.75 | 66.53 | 102.45 | 0.35 |
| 3 | 4280 | 1.94 | 0.93 | 2.87 | 70.38 | 104.61 | 2.51 |
| 4 | 3880 | 1.63 | 0.75 | 2.37 | 70.02 | 104.42 | 2.32 |
| 5 | 2940 | 1.18 | 0.56 | 1.74 | 69.17 | 103.96 | 1.86 |
| 6 | 5700 | 2.58 | 1.31 | 3.89 | 71.66 | 105.28 | 3.18 |
| 7 | 0 | −0.50 | −0.44 | −0.94 | 66.53 | 102.45 | 0.35 |
| 8 | 4560 | 2.11 | 1.02 | 3.13 | 70.63 | 104.74 | 2.64 |
| 9 | 3800 | 1.69 | 0.75 | 2.44 | 69.95 | 104.38 | 2.28 |
| 10 | 3280 | 1.87 | 0.91 | 2.78 | 69.48 | 104.13 | 2.03 |
| 11 | 5480 | 2.81 | 1.56 | 4.37 | 71.46 | 105.18 | 3.08 |
| 12 | 0 | −0.43 | −0.48 | −0.91 | 66.53 | 102.45 | 0.35 |
| 13 | 4560 | 2.15 | 1.12 | 3.27 | 70.63 | 104.74 | 2.64 |
| 14 | 3820 | 1.73 | 0.83 | 2.56 | 69.97 | 104.39 | 2.29 |
| 15 | 3440 | 1.45 | 0.68 | 2.13 | 69.62 | 104.21 | 2.11 |

X1 : CENTER OF MASS LOCATION
X2 : CENTER OF BUOYANCY LOCATION

FIG.10

< CASE 4 >

FIG.11

| (VC)<br>RESIDUAL<br>AIR<br>AMOUNT<br>[ml] | (X2−X1) [cm] | | | |
|---|---|---|---|---|
| | CASE 1 | CASE 2 | CASE 3 | CASE 4 |
| 0 | 0.35 | 0.11 | 0.01 | 0.01 |
| 500 | 0.61 | 0.38 | 0.28 | 0.28 |
| 1000 | 0.87 | 0.64 | 0.54 | 0.54 |
| 1500 | 1.13 | 0.90 | 0.80 | 0.79 |
| 2000 | 1.39 | 1.16 | 1.05 | 1.05 |
| 2500 | 1.64 | 1.41 | 1.30 | 1.30 |
| 3000 | 1.89 | 1.66 | 1.55 | 1.54 |
| 3500 | 2.13 | 1.91 | 1.80 | 1.79 |
| 4000 | 2.38 | 2.15 | 2.04 | 2.03 |
| 4500 | 2.62 | 2.39 | 2.28 | 2.27 |
| 5000 | 2.85 | 2.63 | 2.52 | 2.50 |
| 5500 | 3.09 | 2.86 | 2.75 | 2.73 |
| 6000 | 3.32 | 3.09 | 2.98 | 2.96 |

X1 : CENTER OF MASS LOCATION
X2 : CENTER OF BUOYANCY LOCATION

FIG.12

Vc(ml)

X1 : CENTER OF MASS LOCATION
X2 : CENTER OF BUOYANCY LOCATION

FIG. 13

B (BUOYANT FORCE)

20

WATER SURFACE

W (WEIGHT)

FIG. 15

B (BUOYANT FORCE)

20

23

Fg2

Fg1

Fg3

23
WATER
SURFACE

ARM

W (WEIGHT)

FIG. 14

20

FIG. 16

FIG. 17

FIG. 18

$Fa*Xo=W*X_1$

W (WEIGHT)

FIG. 19

SPRING SCALE

B (BUOYANT FORCE)

Fb.

WATER SURFACE

$X_2$

$X_1$

W (WEIGHT)

$B = W - (Fb + 0.95kg)$

$B*X_2 = W*X_1$

**EP 2 556 862 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Influence of the differences in the center of buoyancy and center of mass locations on the performance of the streamlined gliding. **TAKEO YAMAGISHI.** Master Thesis. Graduate School of Health and Sports Science, Juntendo University, 2008

- **SCOTT P. MCLEAN et al.** Sex differences in the centre of buoyancy location of competitive swimmers. *Journal of Sports Sciences,* 1998, vol. 16, 373-383